(19) Europäisches Patentamt
European Patent Office
Office européen des brevets

(11) **EP 3 406 421 B1**

(12) **EUROPEAN PATENT SPECIFICATION**

(45) Date of publication and mention
of the grant of the patent:
**21.10.2020 Bulletin 2020/43**

(51) Int Cl.:
*B29C 55/12* [(2006.01)]     *B32B 9/00* [(2006.01)]
*B32B 27/36* [(2006.01)]     *C08J 5/18* [(2006.01)]
*B29C 48/08* [(2019.01)]     *C08L 67/00* [(2006.01)]
*B29C 48/00* [(2019.01)]     *B29C 48/21* [(2019.01)]
*B29C 48/36* [(2019.01)]     *B29C 48/495* [(2019.01)]
*B29C 48/92* [(2019.01)]     *B29C 48/88* [(2019.01)]
*B29K 67/00* [(2006.01)]

(21) Application number: **17741440.6**

(22) Date of filing: **18.01.2017**

(86) International application number:
**PCT/JP2017/001586**

(87) International publication number:
**WO 2017/126563 (27.07.2017 Gazette 2017/30)**

(54) **BIAXIALLY-STRETCHED POLYESTER FILM, LAMINATE AND PACKAGING BAG**

BIAXAL GESTRECKTE POLYESTERFOLIE, LAMINAT UND VERPACKUNGSBEUTEL

FILM DE POLYESTER ÉTIRÉ BIAXIALEMENT, STRATIFIÉ ET SACHET D'EMBALLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2016 JP 2016010665**
**30.03.2016 JP 2016068816**

(43) Date of publication of application:
**28.11.2018 Bulletin 2018/48**

(73) Proprietor: **Toyobo Co., Ltd.**
**Osaka-shi**
**Osaka 530-8230 (JP)**

(72) Inventors:
• **GOTO, Takamichi**
**Inuyama-shi**
**Aichi 484-8508 (JP)**

• **YAMAZAKI, Atsushi**
**Inuyama-shi**
**Aichi 484-8508 (JP)**

(74) Representative: **Vossius & Partner**
**Patentanwälte Rechtsanwälte mbB**
**Siebertstrasse 3**
**81675 München (DE)**

(56) References cited:
**EP-A1- 2 754 686          WO-A1-2004/048071**
**WO-A1-2004/048071     WO-A1-2014/077197**
**JP-A- H08 276 553        JP-A- H09 194 604**
**JP-A- 2005 097 560        JP-A- 2005 097 560**
**JP-A- 2008 291 238**

**Description**

TECHNICAL FIELD

The present invention relates to a biaxially-stretched polyester film that has excellent barrier properties, dimensional stability, processability, bag breakage resistance, and chemical resistance, causes less transfer of an extract to contents after retorting, and can be publicly used for a food packaging material that is to be subjected to retorting or heating with a microwave oven.

Moreover, the present invention relates to a biaxially-stretched polyester film that has excellent pinhole resistance at low temperature and is suitable for frozen food that is to be subjected to retorting or heating with a microwave oven or the like.

Furthermore, the present invention relates to a laminated body and a packaging bag for which these biaxially-stretched polyester films are used.

BACKGROUND ART

Hitherto, a biaxially-stretched polyethylene terephthalate film (PET) in which a silicon oxide film or an aluminum oxide film is formed by vapor-deposition, and a laminated film in which a deposition layer is further laminated have been known to have excellent chemical resistance and dimensional change at the time of moisture absorption and causes less elution of a low-molecular-weight component (for example, Patent Literature 1). However, since the PET film is brittle, the conventional art has a problem in that contents leak when a bag falls, and the pinhole resistance is poor.

Meanwhile, a technique has been known in which a film having favorable pinhole resistance and causing no leaking of contents at the time of fall of a bag is obtained by laminating a deposition layer on a biaxially-stretched nylon film (ONY) (for example, Patent Literature 2). However, this conventional art has a problem in that dimensional change at the time of moisture absorption or at the time of heating is great, so that curling occurs during processing.

As a method for achieving all of desired pinhole resistance, low elution of a low-molecular-weight component, and low thermal shrinkage, a technique has been known in which a low-cost packaging material, for boiling or retorting, having low elution and excellent transparency can be obtained by using, as a base layer of a transparent film having gas barrier properties, a layer having a biaxially-stretched multilayer film obtained by biaxially stretching a multilayer film having a polyester-based resin layer and a polyamide-based resin layer (for example, Patent Literature 3). Since separation is likely to occur at the interface between the polyester-based resin layer and the polyamide-based resin layer, this conventional art has a problem in that, when a bag falls, the bag is likely to be broken, resulting in leaking of contents.

As for a method for solving these problems, a biaxially-stretched polybutylene terephthalate-based film formed from at least a polybutylene terephthalate resin or a polyester-based resin composition obtained by blending a polyethylene terephthalate resin in a range of 30% by weight or less with respect to a polybutylene terephthalate resin has been known to be obtained as a biaxially-stretched polybutylene terephthalate-based film that can be used even under a severe retorting condition of 130°C or higher and has excellent bag breakage resistance, pinhole resistance, and dimensional stability (for example, Patent Literature 4).

However, a film production method by tubular simultaneous biaxial stretching disclosed in the conventional art has a problem in that the thickness accuracy is poor due to the production method, and the plane orientation coefficient is not increased, so that the bag breakage resistance is inferior, and when processing such as a step of applying an adhesive to a film is performed, the film is likely to stretch and thus the processability is inferior.

In addition, it is known that, when the polybutylene terephthalate resin is heated, 1,4-butanediol, which is the monomer component of polybutylene terephthalate, and tetrahydrofuran (THF), which is produced by a cyclization reaction accompanying pyrolysate of 1,4-butanediol, are produced (for example, Non-Patent Literature 1).

Therefore, it is pointed out that, when high-temperature heating such as retorting is performed, these low-molecular-weight components elute, resulting in deterioration of the flavor of contents (for example, Patent Literature 5).

Patent Literature 6 discloses a film for metal laminating comprising a mixture of PET and PBT, where the THF and oligomer content is reduced.

Furthermore, in the case where these plastic films are used for packaging frozen food and the like, since the distribution environment is mainly a low-temperature distribution environment, a large quantity of products are carried particularly during transportation of the products. A packaging material formed from a plastic film has a property in which the packaging material is more likely to lose flexibility and become hard and brittle at lower temperatures. Thus, a problem, such as breakage of a packaging bag due to the shape of a content in the packaging bag or due to vibration or the like during transportation, or occurrence of bag breakage or a pinhole by falling impact due to poor handling, in a distribution process from the production site to a consumer, often occurs.

PRIOR ART DOCUMENT

PATENT DOCUMENTS

Patent Document 1: Japanese Laid-Open Patent Publication No. H11-10725
Patent Document 2: Japanese Laid-Open Patent Publication No. H6-278240
Patent Document 3: Japanese Laid-Open Patent Publication No. 2013-154605
Patent Document 4: Japanese Laid-Open Patent Publication No. 2012-214248
Patent Document 5: Japanese Laid-Open Patent Publication No. H8-311212
Patent Document 6: JP H09 194604 A

NON-PATENT DOCUMENTS

Non-Patent Document 1: Osamu Sato et al., Chem. Lett. 2015, 44, 1312-1314

SUMMARY OF THE INVENTION

PROBLEMS TO BE SOLVED BY THE INVENTION

The present invention has been made in view of the problems of the conventional art. That is, an object of the present invention is to provide a biaxially-stretched polyester film that has excellent barrier properties, dimensional stability, processability, bag breakage resistance, and chemical resistance, causes less transfer of an extract to contents after retorting, and can be suitably used for a food packaging material that is to be subjected to retorting or heating with a microwave oven.

SOLUTION TO THE PROBLEMS

As a result of thorough research carried out for accomplishing the above object, the present inventors have found that, in a process for producing a biaxially-stretched polybutylene terephthalate film, when the temperature for melt-extruding a raw material polyester resin composition is high, resin decomposition proceeds, resulting in an increase in the amount of 1,4-butanediol and tetrahydrofuran remaining in an obtained biaxially-stretched polybutylene terephthalate film, and thus the following is important in order to sufficiently reduce a low-molecular-weight component in a film after biaxial stretching.

(1) In a step of extruding a polybutylene terephthalate resin, extruding the polybutylene terephthalate resin at a temperature at which the resin is not decomposed, and/or adding an antioxidant in order to inhibit pyrolysis of the resin. In the case where the antioxidant is added, the extrusion temperature is preferably not higher than 300°C. In the case where the antioxidant is not added, the extrusion temperature is preferably not higher than 268°C.
(2) Removing a low-molecular-weight component remaining in a film by performing a sufficient heat treatment in a film stretching step. The temperature is preferably not lower than 60°C in a longitudinal stretching step and not lower than 90°C in a transverse stretching step.
(3) Providing a thermo-setting step after the transverse stretching step, thereby increasing the degree of crystallinity of the film and thus reducing an amount of a non-crystal component which is easily pyrolized. The temperature in the thermo-setting step is preferably not lower than 205°C.

Then, the present inventors have completed the present invention.
That is, the present invention is

1. a biaxially-stretched polyester film having features (a), (b), (c), and (d) below and having a thickness of 10 to 30 μm:

(a) the biaxially-stretched polyester film is formed from a polyester resin composition containing a polybutylene terephthalate resin (A) in a range of 60% by mass or more;
(b) a thermal shrinkage of the biaxially-stretched polyester film at 150°C for 30 minutes is -2 to +2%;
(c) thickness accuracy of the biaxially-stretched polyester film is 1 to 20%; and
(d) a total amount of 1,4-butanediol and tetrahydrofuran volatilized during heating at a temperature of 135°C for 60 minutes is not more than 1800 ppb.

It is preferable that 2. the biaxially-stretched polyester film according to the above 1, wherein the polyester composition contains 60 to 90% by weight of the polybutylene terephthalate resin (A) and a polyester resin (B) different from the polybutylene terephthalate resin (A) and having a glass transition temperature of 0°C or higher.

It is preferable that 3. the biaxially-stretched polyester film according to the above 1, wherein the polyester composition contains 60 to 90% by weight of the polybutylene terephthalate resin (A) and a polyester resin (C) different from the polybutylene terephthalate resin (A) and having a glass transition temperature lower than 0°C.

It is preferable that 4. the biaxially-stretched polyester film according to the above 3, wherein the polyester resin (C) different from the polybutylene terephthalate resin (A) and having a glass transition temperature lower than 0°C is at least one resin selected from between a polybutylene terephthalate resin obtained by copolymerizing at least one dicarboxylic acid selected from the group consisting of isophthalic acid, orthophthalic acid, naphthalenedicarboxylic acid, biphenyldicarboxylic acid, cyclohexanedicarboxylic acid, adipic acid, azelaic acid, and sebacic acid, and a polybutylene terephthalate resin obtained by copolymerizing at least one diol component selected from the group consisting of ethylene glycol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate diol.

It is preferable that 5. a laminated film formed by an inorganic thin film layer being laminated on at least one surface of the biaxially-stretched polyester film according to the above 1 to 4.

It is preferable that 6. a laminated body containing a heat-sealable resin layer and the biaxially-stretched polyester film according to the above any one of 1 to 4.

It is preferable that 7. a packaging bag formed from the laminated body according to the above 6.

EFFECT OF THE INVENTION

With this technique by the present inventors, it becomes possible to obtain a biaxially-stretched polyester film that can be used as a base film for vapor-deposition, has excellent dimensional stability, processability, bag breakage resistance, and chemical resistance, causes less transfer of a low-molecular-weight component to contents even after retorting, and can be suitably used for a food packaging material for subjected to retorting or heating with a microwave oven.

DESCRIPTION OF EMBODIMENTS

Hereinafter, the present invention will be described in detail.

The polyester resin composition used in the present invention contains a polybutylene terephthalate resin (A) as a main component, and the content of the polybutylene terephthalate resin (A) in the polyester resin composition is preferably not less than 60% by mass and further preferably not less than 70% by mass. If the content of the polybutylene terephthalate resin (A) is less than 60% by mass, impact strength and pinhole resistance decrease, and film characteristics become insufficient.

In the polybutylene terephthalate resin (A) used as the main component, terephthalic acid is contained as a dicarboxylic acid component in an amount of preferably 90 mol% or more, more preferably 95 mol% or more, further preferably 98 mol% or more, and most preferably 100 mol%. 1,4-butanediol is contained as a glycol component in an amount of preferably 90 mol% or more, more preferably 95 mol% or more, and further preferably 97 mol% or more, and most preferably, nothing other than by-products produced by ether linkage of 1,4-butanediol during polymerization is contained.

For the purpose of adjusting the film formability at the time of biaxial stretching and the mechanical characteristics of an obtained film, the polyester resin composition used in the present invention can contain a polyester resin (B) different from the polybutylene terephthalate resin and having a glass transition temperature of 0°C or higher, or a polyester resin (C) different from the polybutylene terephthalate resin and having a glass transition temperature lower than 0°C.

Examples of the polyester resin (B) different from polybutylene terephthalate and having a glass transition temperature of 0°C or higher include polyethylene terephthalate (PET), polyethylene naphthalate (PEN), polybutylene naphthalate (PBN), polypropylene terephthalate (PPT), and a polybutylene terephthalate resin obtained by copolymerizing at least one acid component selected from the group consisting of isophthalic acid, orthophthalic acid, naphthalenedicarboxylic acid, biphenyldicarboxylic acid, cyclohexanedicarboxylic acid, adipic acid, azelaic acid, and sebacic acid. These resins have a glass transition temperature of 0°C or higher and have an effect of enhancing the dimensional stability of a laminated body.

In addition, the polyester resin (C) different from the polybutylene terephthalate resin (A) and having a glass transition temperature lower than 0°C include a polybutylene terephthalate resin obtained by copolymerizing at least one dicarboxylic acid selected from the group consisting of isophthalic acid, orthophthalic acid, naphthalenedicarboxylic acid, biphenyldicarboxylic acid, cyclohexanedicarboxylic acid, adipic acid, azelaic acid, and sebacic acid, and a polybutylene terephthalate resin obtained by copolymerizing at least one diol component selected from the group consisting of ethylene glycol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate diol.

An example of a method for making the glass transition temperature of the polyester resin (C) different from the polybutylene terephthalate resin (A) lower than 0°C is to adjust the amount of the above polymerization component. Specifically, for example, in the case with adipic acid or sebacic acid, the amount thereof may be set within a range of about 30 mol% or more.

In the case where the glass transition temperature is lower than 0°C, there is an effect of improving the pinhole resistance of a laminated body during freezing storage.

Regarding the upper limit of the content, in the polyester resin composition, of the polyester resin (B) different from the polybutylene terephthalate resin (A) having a glass transition temperature of 0°C or higher and the polyester resin (C) different from the polybutylene terephthalate resin (A) and having a glass transition temperature lower than 0°C, the content is preferably not more than 40% by mass and more preferably not more than 30% by mass. If the content exceeds 40% by mass, the mechanical characteristics of polybutylene terephthalate are impaired, impact strength, bag breakage resistance, and pinhole resistance become insufficient, and a decrease in transparency or barrier properties or the like may occur.

The lower limit of the intrinsic viscosity of the polybutylene terephthalate resin (A) used in the present invention is preferably 0.9 dl/g, more preferably 0.95 dl/g, and further preferably 1.0 dl/g.

If the intrinsic viscosity of the polybutylene terephthalate resin (A) is less than 0.9 dl/g, the intrinsic viscosity of a film obtained through film production may decrease, and piercing strength, impact strength, bag breakage resistance, and the like may decrease.

The upper limit of the intrinsic viscosity of the polybutylene terephthalate resin is preferably 1.3 dl/g. If the intrinsic viscosity exceeds the above value, stress applied in stretching an un-stretched sheet obtained by melt-extruding the polyester resin composition may excessively increase, and the film formability may deteriorate. In the case where the polybutylene terephthalate resin (A) having a high intrinsic viscosity is used, the melt viscosity of the polyester resin composition increases, and thus it is necessary to set the extrusion temperature to a high temperature. However, when the polyester resin composition is extruded at a higher temperature, decomposition products are likely to be produced, and the amount of 1,4-butanediol remaining in an obtained biaxially-stretched polybutylene terephthalate film and tetrahydrofuran (THF) produced by a cyclization reaction accompanying pyrolysate of 1,4-butanediol increases. In addition, when a packaging material for which this film is used is subjected to retorting, 1,4-butanediol and tetrahydrofuran are eluted therefrom.

In order to reduce effluents such as 1,4-butanediol and tetrahydrofuran after retorting of the biaxially-stretched polyester film according to the present invention, it is also effective to add an antioxidant.

In a step of melt-extruding the polyester resin composition, a decrease in the molecular weight of the polybutylene terephthalate resin can be inhibited, and the amount of 1,4-butanediol and tetrahydrofuran remaining in an obtained biaxially-stretched polyester film can be reduced. In addition, decomposition of polybutylene terephthalate gradually proceeds by heating, and thus addition of an antioxidant is effective for inhibiting pyrolysis that occurs when a packaging material for which polybutylene terephthalate is used is subjected to retorting.

Examples of the antioxidant to be used include a primary antioxidant (having a radical scavenging or chain terminating effect, for example, phenol-based antioxidants or amine-based antioxidants) and a secondary antioxidant (having a peroxide decomposing effect, for example, phosphorus-based antioxidants, sulfur-based antioxidants, etc.), and any of these antioxidants can be used. Specific examples thereof include phenol-based antioxidants (for example, phenol type, bisphenol type, thiobis phenol type, polyphenol type, etc.), amine-based antioxidants (for example, diphenylamine type, quinoline type, etc.), phosphorus-based antioxidants (for example, phosphite type, phosphonite type, etc.), and sulfur-based antioxidants (for example, thiodipropionic acid ester type, etc.).

More specific examples thereof include n-octadecyl-$\beta$-(4'-hydroxy-3,5'-di-t-buthylphenyl)propionate, tetrakis[methylene-3-(3',5'-di-t-butyl-4'-hydroxyphenyl)propionate] (commercially available as "Irganox 1010" (trade name)), 1,1,3-tris(2-methyl-4-hydroxy-5-t-buthylphenyl)butane, 1,3,5-tris(3,5-di-t-butyl-4-hydroxybenzyl)-S-triazine-2,4,6(1H,3H,5H)-trione, 1,3,5-trimethyl-2,4,6-tris(3,5-di-t-butyl-4-hydroxybenzyl)benzene (commercially available as "Irganox 1330" (trade name)), tris(mixed monon- nonylphenyl and/or dinonylphenyl)phosphite, cyclic neopentane tetrail-bis(octadecylphosphite), tris(2,4-di-t-buthylphenylphosphite), 2,2-methylene bis(4,6-di-t-butylphenyl)octyl phosphite, dilauryl thiodipropionate, di-myristyl thiodipropionate, and di-stearyl thiodipropionate. One of these antioxidants may be used alone, or two or more of these antioxidants may be used in combination. Among them, from the standpoint of availability and food hygiene, n-octadecyl-$\beta$-(4'-hydroxy-3,5'-di-t-buthylphenyl)propionate and tetrakis[methylene-3-(3',5'-di-t-butyl-4'-hydroxyphenyl)propionate] (Irganox 1010) are preferable.

The upper limit of the concentration of the antioxidant in the polyester resin composition is preferably 2000 ppm and further preferably 1000 ppm. If the concentration of the antioxidant exceeds the upper limit, the antioxidant itself may become an effluent.

The polyester resin composition may contain, as necessary, conventionally known additives, for example, a lubricant, a stabilizer, a coloring agent, an anti-static agent, an ultraviolet absorber, etc.

As the lubricant, inorganic lubricants such as silica, calcium carbonate, and alumina, and organic lubricants are preferable, silica and calcium carbonate are more preferable, and silica is particularly preferable from the standpoint of reducing haze. These lubricants can provide transparency and slippage.

The lower limit of the concentration of the lubricant in the polyester resin composition is preferably 100 ppm, more preferably 500 ppm, and further preferably 800 ppm. If the concentration of the lubricant is less than the above value, the slippage of the film may decrease.

The upper limit of the concentration of the lubricant is preferably 20000 ppm, more preferably 10000 ppm, and further preferably 1800 ppm. If the concentration of the lubricant exceeds the above value, the transparency may decrease.

Production methods for obtaining the biaxially-stretched polyester film of the present invention will be specifically described, but the production method is not limited thereto.

First, the polyester resin composition, which is a film raw material, is dried or dried by hot air such that the moisture content thereof is less than 200 ppm. Next, each raw material is weighed, mixed, fed to an extruder, and melt-extruded into a sheet shape. Furthermore, the sheet in a melted state is brought into close contact with a cooling rotating roll (casting roll) made of metal using an electrostatic charging method to be cooled and solidified, whereby an un-stretched sheet is obtained.

In order to remove foreign matter contained in the melted polyester resin composition, high-precision filtration can be performed. A filter used for the high-precision filtration of the melted resin is not particularly limited, but a filter that is a stainless sintered body has excellent performance of removing aggregates or high-melting-point organics containing Si, Ti, Sb, Ge, or Cu as a main component, and thus is suitable.

The lower limit of the temperature for melt-extruding the polyester resin composition is preferably 200°C, more preferably 250°C, and further preferably 260°C. If the temperature is lower than the above value, discharge may become unstable. The upper limit of the resin melting temperature is preferably 268°C. If the temperature exceeds the above value, decomposition of the resin proceeds, resulting in an increase in the amount of 1,4-butanediol and tetrahydrofuran remaining in the biaxially-stretched polybutylene terephthalate film.

In the case where the polyester resin composition contains the above-described antioxidant, melt-extrusion at higher temperature becomes possible, but the temperature needs to be set to 300°C or lower.

Next, it is necessary to reduce the difference in degree of crystallinity in the width direction of the un-stretched sheet obtained by melt-extruding the polyester resin composition, casting the polyester resin composition onto the cooling roll, and cooling and solidifying the polyester resin composition. A specific method therefor is preferably to multi-layer the polyester resin composition at the time of casting onto the cooling roll such that each layer has the same composition, and cast the polyester resin composition.

Since the polybutylene terephthalate resin (A) has a high crystallization rate, crystallization also proceeds during cooling and solidification. In the case where casting is merely performed with a single layer maintained without performing anything as in the conventional art, no obstacle that can inhibit crystal growth is present in an obtained un-stretched sheet, and thus the crystals grow into large-sized spherulites. As a result, the obtained un-stretched sheet has high yield stress and is easy to be broken at the time of biaxial stretching. In addition, an obtained biaxially-stretched polyester film has less flexibility and therefore insufficient pinhole resistance and bag breakage resistance.

Meanwhile, when the polyester resin composition is multi-layered such that each layer has the same composition, and then is melt-extruded, crystals cannot grow beyond the interfaces between the respective layers, and thus an obtained un-stretched sheet has reduced yield stress and is unlikely to be broken at the time of biaxial stretching. In addition, an obtained biaxially-stretched polyester film has excellent impact strength and therefore sufficient pinhole resistance and bag breakage resistance.

In addition, a crystal structure in which 1,4-butanediol and tetrahydrofuran are easily removed in a heat treatment step that is a step after biaxial stretching is formed.

In a specific method for multi-layering the polyester resin composition such that each layer has the same composition, a general multi-layering apparatus (e.g., a multi-layer feed block, a static mixer, a multi-layer multi-manifold, etc.) can be used.

For example, a method in which a thermoplastic resin is sent from different channels using two or more extruders and the thermoplastic resin is layered in multi-layers using a feed block, a static mixer, a multi-manifold die, or the like, can be used. In the case of forming multi-layers of the same composition as in the present invention, it is also possible to accomplish the object of the present invention by using a single extruder and introducing the above-described multi-layering apparatuses in a melt line from the extruder to a die.

The lower limit of the temperature of the cooling roll is preferably -10°C. If the temperature of the cooling roll is lower than the above value, the crystallization inhibition effect may be saturated. The upper limit of the temperature of the cooling roll is preferably 40°C. If the temperature of the cooling roll exceeds the above value, the degree of crystallinity may become excessively high and thus stretching may become difficult. In addition, in the case where the temperature of the cooling roll is set within the above range, it is preferable to decrease the humidity in the environment around the cooling roll to prevent dew formation.

In the casting, the temperature of the cooling roll surface increases since the resin with high temperature is brought into contact with the surface. Normally, the cooling roll is cooled by causing cooling water to flow through a pipe that is installed so as to extend through the interior of the cooling roll. In such a case, it is necessary to eliminate the temperature difference in the width direction of the cooling roll surface, for example, by ensuring a sufficient amount of cooling water, devising the arrangement of the pipe, carrying out maintenance such that sludge is prevented from adhering to the pipe, etc. In this case, the thickness of the un-stretched sheet is suitably in a range of 15 to 2500 μm.

The above-described casting with the multi-layer structure is performed in at least 60 or more layers, preferably 250 or more layers, and further preferably 1000 or more layers. If the number of layers is small, the effect of improving stretchability is lost.

Next, a stretching method will be described. The stretching method can be either simultaneous biaxial stretching or sequential biaxial stretching. For enhancing piercing strength, it is necessary to increase a plane orientation coefficient, and sequential biaxial stretching is most preferable from the standpoint that the film production speed is high and the productivity is high. In the case of sequential biaxial stretching, the un-stretched sheet is stretched in a direction in which the film flows, that is, in a so-called machine direction, and then stretched in a direction perpendicular to the direction in which the film flows, that is, in a so-called transverse direction.

The lower limit of the temperature for stretching in the machine direction (hereinafter, MD) is preferably 60°C and more preferably 65°C. If the temperature is lower than 60°C, not only film-breakage may easily occur, but also, since the orientation in the machine direction becomes stronger due to stretching at low temperature, the shrinkage stress during a thermo-setting treatment increases and thus the distortion of molecular orientation in the width direction increases. Consequently, linear tear properties in the longitudinal direction may decrease. The upper limit of the MD stretching temperature is preferably 100°C and more preferably 95°C. If the temperature exceeds 100°C, mechanical characteristics may deteriorate since no orientation is applied.

In addition, by setting the MD stretching temperature to be not lower than 60°C, 1,4-butanediol and tetrahydrofuran remaining in the biaxially-stretched polybutylene terephthalate can be further reduced.

The lower limit of the MD stretching ratio is preferably 2.6 times and particularly preferably 2.8 times. If the MD stretching ratio is less than the above value, mechanical characteristics and thickness unevenness may become worse since no orientation is applied. The upper limit of the MD stretching ratio is preferably 3.5 times, more preferably 3.0 times, and particularly preferably 3.8 times. If the MD stretching ratio exceeds the above value, not only the effect of improving mechanical strength and thickness unevenness may be saturated, but also, since the orientation in the machine direction becomes stronger, the shrinkage stress during the thermo-setting treatment increases and thus the distortion of molecular orientation in the width direction increases. Consequently, linear tear properties in the longitudinal direction may decrease.

The lower limit of the temperature for stretching in the transverse direction (hereinafter, TD) is preferably 85°C and more preferably 90°C. If the temperature is lower than 85°C, film-breakage may easily occur. The upper limit of the TD stretching temperature is preferably 100°C. If the TD stretching temperature exceeds the above value, mechanical characteristics may deteriorate since no orientation is applied.

In addition, by setting the TD stretching temperature to be not lower than 80°C, 1,4-butanediol and tetrahydrofuran remaining in the biaxially-stretched polybutylene terephthalate can be further reduced.

The lower limit of the TD stretching ratio is preferably 3.5 times, more preferably 3.6 times, and particularly preferably 3.7 times. If the TD stretching ratio is less than the above value, mechanical characteristics and thickness unevenness may become worse since no orientation is applied. The upper limit of the TD stretching ratio is preferably 5 times, more preferably 4.5 times, and particularly preferably 4.0 times. If the TD stretching ratio exceeds the above value, the effect of improving mechanical strength and thickness unevenness may be saturated.

The lower limit of the thermo-setting temperature is preferably 205°C and more preferably 210°C. If the thermo-setting temperature is lower than the above value, not only thermal shrinkage may become large and deviation or shrinkage during processing may occur, but also 1,4-butanediol and tetrahydrofuran produced through pyrolysis of polybutylene terephthalate in the resin extruding step may remain in the film, and may transfer to contents in a packaging material due to heating such as retorting, resulting in deterioration of the flavor of food. The upper limit of the thermo-setting temperature is preferably 240°C. If the thermo-setting temperature exceeds the above value, the film may melt, or even when the film does not melt, the film may become brittle.

The lower limit of a TD relaxation rate is preferably 0.5%. If the rate is less than the above value, film-breakage may easily occur during thermo-setting. The upper limit of the TD relaxation rate is preferably 5%. If the rate exceeds the above value, not only sagging may occur and result in thickness unevenness, but also shrinkage in the longitudinal direction during thermo-setting may become large, and consequently, the distortion of molecular orientation in the end portion may become large and linear tear properties may decrease.

The lower limit of the film thickness of the biaxially-stretched polyester film of the present invention is preferably 3 μm, more preferably 5 μm, and further preferably 8 μm. If the film thickness is less than 3 μm, the strength of the film may become insufficient.

The upper limit of the film thickness is preferably 100 μm, more preferably 75 μm, and further preferably 50 μm. If the film thickness exceeds 100 μm, processing for the object of the present invention may become difficult due to the excessive thickness.

In the biaxially-stretched polyester film of the present invention, the resin having the same composition is preferably present over the entire area of the film.

The upper limit of the thickness accuracy (Tv (%)) of the biaxially-stretched polyester film of the present invention is preferably 10% and more preferably 8%. If the thickness accuracy (Tv (%)) exceeds 10%, the film processability easily decreases. The method for measuring the thickness accuracy (Tv (%)) will be described below.

A film piece is cut out in the longitudinal direction from a center portion of an obtained film roll, and thicknesses are measured at 100 locations on the film piece at pitches of 5 cm using a dial gauge. Then, where the maximum thickness is denoted by Tmax, the minimum thickness is denoted by Tmin, and the average thickness is denoted by Tave, the thickness accuracy (Tv) is obtained by equation (1) below.

$$\mathrm{Tv}(\%) = \{(\mathrm{Tmax} - \mathrm{Tmin})/\mathrm{Tave}\} \times 100\ (\%) \qquad (1)$$

In the present invention, the total amount of 1,4-butanediol and tetrahydrofuran that evaporate during heating of the biaxially-stretched polyester film at a temperature of 135°C for 60 minutes is preferably not more than 1800 ppb. The total amount is preferably 1700 ppb and further preferably not more than 1600 ppb. In addition, the total amount is particularly preferably not more than 1500 ppb. By setting the total amount to be not more than 1800 ppb, transfer of 1,4-butanediol and tetrahydrofuran to contents after retorting can be reduced, and thus change in the flavor of the contents can be inhibited.

At this time, the amount of 1,4-butanediol that evaporates during heating at a temperature of 135°C for 60 minutes is preferably not more than 1800 ppb and more preferably 1700 ppb. In addition, the amount is particularly preferably not more than 1600 ppb.

In addition, the amount of tetrahydrofuran that evaporates during heating at a temperature of 135°C for 60 minutes is preferably not more than 200 ppb, more preferably 100 ppb, and most preferably not more than 70 ppb.

The lower limit of the plane orientation coefficient of the biaxially-stretched polyester film of the present invention is preferably 0.1. If the plane orientation coefficient is less than 0.1, piercing strength, impact strength, and the like may decrease. The upper limit of the plane orientation coefficient is preferably 0.15. If the plane orientation coefficient exceeds 0.15, not only a decrease in productivity but also a decrease in flexibility or the like may occur. The plane orientation coefficient can be set within the range on the basis of the MD stretching ratio and the thermo-setting temperature. The method for measuring the plane orientation coefficient will be described below.

For a sample, the refractive index (nx) in the longitudinal direction of the film and the refractive index (ny) in the width direction of the film are measured by the A method in JIS K 7142-1996 with sodium D-rays as a light source using an Abbe's refractometer, and the plane orientation coefficient is calculated by a calculation equation below.

$$\text{Plane orientation coefficient } (\Delta P) = (\mathrm{nx} + \mathrm{ny})/2 - \mathrm{nz}$$

The lower limit of the impact strength is preferably 0.05 J/μm. If the impact strength is less than the above value, the strength may become insufficient at the time of use as a bag. The upper limit of the impact strength is preferably 0.2 J/μm. If the impact strength exceeds the above value, the improvement effect may be saturated. The method for measuring the impact strength will be described below.

The strength of the film in an environment at 23°C against impact punching is measured according to JIS K7160-1996 using an impact tester manufactured by TOYO SEIKI SEISAKU-SHO, LTD. As an impact sphere, a sphere with a diameter of 1/2 inches is used. The unit is J/μm.

The lower limit of the piercing strength of the biaxially-stretched polyester film of the present invention is preferably 0.8 N/μm and more preferably 0.9 N/μm. If the piercing strength is less than 0.8 N/μm, the strength may become insufficient during processing or when a bag is formed from the film. The upper limit of the piercing strength is preferably 1.5 N/μm. If the piercing strength exceeds 1.5 N/μm, the improvement effect is saturated. The piercing strength can be set within the range on the basis of the MD ratio and the thermo-setting temperature. The method for measuring the piercing strength will be described below.

The piercing strength is measured according to "2. Testing methods for strength, etc." in "Standards for food, additives, etc. Chapter III: Apparatus and Containers and Packaging" (Notification No. 20 of the Ministry of Health and Welfare, 1982) in the Food Hygiene Act. The film is stuck with a needle having a tip diameter of 0.7 mm at a sticking speed of 50 mm/minute, and the strength at the time when the needle penetrates the film is measured and regarded as the piercing strength. The measurement is performed at normal temperature (23°C), and the unit is [N/$\mu$m].

The lower limit of the thermal shrinkage, after heating at 150°C for 15 minutes, in the MD and TD directions of the biaxially-stretched polyester film of the present invention is preferably -2.0%/$\mu$m. If the thermal shrinkage is less than the above value, the improvement effect may be saturated, and the film may become mechanically brittle.

The upper limit of the thermal shrinkage, after heating at 150°C for 15 minutes, in the MD and TD directions of the biaxially-stretched polyester film of the present invention is preferably 2.0%/$\mu$m, more preferably 1.8%/$\mu$m, and further preferably 1.4%/$\mu$m. If the thermal shrinkage exceeds the above value, pitch deviation and the like may occur due to dimensional change during processing such as printing. In addition, generally, the thermal shrinkage of a film is adjusted on the basis of the TD relaxation rate and the treatment temperature in a TD thermo-setting treatment. If the thermal shrinkage in the MD direction is more than 2%, it indicates that the TD thermo-setting treatment is insufficient. In such a film, there is a possibility that the amount of 1,4-butanediol and tetrahydrofuran remaining in the film is not sufficiently reduced, so that the flavor or the like of contents may be deteriorated. The method for measuring the thermal shrinkage will be described below.

The thermal shrinkage is measured by the dimensional change testing method described in JIS-C-2151-2006.21, except that the test temperature is set to 150°C and the heating time is set to 15 minutes. A test piece is used according to the description at 21.1(a).

The upper limit of the orientation axis angle of the film of the present invention is preferably 30°, more preferably 28°, and further preferably 25°. If the orientation axis angle is less than the above value, the linear tear properties when the film is torn in the longitudinal direction thereof may decrease.

The upper limit of the MD refractive index of the film of the present invention is preferably 1.640, more preferably 1.635, and further preferably 1.630. If the MD refractive index exceeds the above value, the effect on the mechanical characteristics and the linear tear properties of the film may be saturated.

The upper limit of the MD refractive index of the film of the present invention is preferably 1.670, more preferably 1.669, and further preferably 1.668. If the MD refractive index exceeds the above value, the effect on the mechanical characteristics and the linear tear properties of the film may be saturated.

The upper limit of the haze per thickness of the biaxially-stretched polyester film of the present invention is preferably 0.66%/$\mu$m, more preferably 0.60%/$\mu$m, and further preferably 0.53%/$\mu$m.

If the haze exceeds the above value, when the film is subjected to printing, there is a possibility that the quality of printed characters and images is impaired.

The biaxially-stretched polyester film of the present invention can provide excellent gas barrier properties when being made into a laminated film having an inorganic thin film layer at least on one surface of the film. A thin film formed from a metal or an inorganic oxide is preferably used as the inorganic thin film layer.

The material for forming the inorganic thin film layer is not particularly limited as long as the material can be made into a thin film, but from the standpoint of gas barrier properties, inorganic oxides such as silicon oxide (silica), aluminum oxide (alumina), and mixtures of silicon oxide and aluminum oxide are preferable. In particular, a composite oxide of silicon oxide and aluminum oxide is preferable from the standpoint of achieving flexibility and denseness of the thin film layer.

In this composite oxide, regarding the mixing ratio of the silicon oxide and the aluminum oxide, the mass ratio of $Al_2O_3$ is preferably in a range of 20 to 70%. If $Al_2O_3$ is less than 20%, the water vapor barrier properties may decrease. On the other hand, if $Al_2O_3$ exceeds 70%, the inorganic thin film layer tends to be hard, so that there is a possibility that, during secondary processing such as printing or lamination, the film is broken and the barrier properties decrease. The silicon oxide as used herein is various silicon oxides such as SiO and $SiO_2$, or a mixture thereof, and the aluminum oxide as used herein is various aluminum oxides such as AlO and $Al_2O_3$, or a mixture thereof.

The film thickness of the inorganic thin film layer is normally 1 to 800 nm and preferably 5 to 500 nm. If the film thickness of the inorganic thin film layer is less than 1 nm, it may be difficult to obtain satisfactory gas barrier properties. On the other hand, even when the film thickness exceeds 800 nm such that the inorganic thin film layer is excessively thickened, the gas barrier properties improving effect equivalent to this thickness is not obtained, and such a film thickness is rather disadvantageous in terms of flex resistance and production cost.

The method for forming the inorganic thin film layer is not particularly limited, and known vapor deposition methods, for example, physical vapor deposition methods (PVD methods) such as a vacuum vapor deposition method, a sputtering method, and an ion plating method, or chemical vapor deposition methods (CVD methods) may be adopted as appropriate. Hereinafter, a typical method for forming the inorganic thin film layer will be described by taking a silicon oxide-aluminum oxide based thin film as an example. For example, in the case of adopting a vacuum vapor deposition method, a mixture of $SiO_2$ and $Al_2O_3$, a mixture of $SiO_2$ and Al, or the like is preferably used as a vapor deposition raw material. Normally, particles are used as these vapor deposition raw materials. In this case, the size of each particle is desirably a size that does not change the pressure during vapor deposition, and a preferable particle size is 1 mm to 5 mm.

For heating, systems such as resistive heating, high frequency induction heating, electron beam heating, and laser heating can be adopted. It is also possible to adopt reactive vapor deposition in which oxygen, nitrogen, hydrogen, argon, carbon dioxide gas, water vapor, or the like is introduced as a reaction gas or a means such as ozone addition or ion assist is used. Furthermore, film production conditions such as applying a bias to a body to be vapor-deposited (film to be vapor-deposited) and heating or cooling the body to be vapor-deposited can be arbitrarily changed. Similarly, the vapor deposition materials, reaction gases, application of a bias to the body to be vapor-deposited, heating/cooling, and the like can be changed even when a sputtering method or a CVD method is adopted.

In the biaxially-stretched polyester film of the present invention, an adhesion layer can be provided between the biaxially-stretched polybutylene terephthalate film and the inorganic thin film layer for the purpose of ensuring desired laminate strength and barrier properties after retorting.

Examples of the adhesion layer provided between the biaxially-stretched polyester film and the inorganic thin film layer include layers obtained by adding curing agents such as epoxy-based curing agents, isocyanate-based curing agents, and melamine-based curing agents to resins such as urethane-based resins, polyester-based resins, acrylic-based resins, titanium-based resins, isocyanate-based resins, imine-based resins, and polybutadiene-based resins. Examples of the solvent include: aromatic solvents such as benzene and toluene; alcohol solvents such as methanol and ethanol; ketone solvents such as acetone and methyl ethyl ketone; ester solvents such as ethyl acetate and butyl acetate; and polyhydric alcohol derivatives such as ethylene glycol monomethyl ether. Resin compositions used for these adhesion layers preferably contain a silane coupling agent having at least one or more organic functional groups. Examples of the organic functional groups include an alkoxy group, an amino group, an epoxy group, and an isocyanate group. By the addition of the silane coupling agent, the laminate strength after retorting is further improved.

Among the resin compositions used for the adhesion layer, a mixture of an acrylic-based resin, a urethane-based resin, and a resin containing an oxazoline group is preferably used. The oxazoline group has high affinity with the inorganic thin film, and can react with a metal hydroxide and an oxygen deficiency portion of an inorganic oxide that is generated during formation of the inorganic thin film layer, and thus firm adhesion to an inorganic thin film layer is exhibited. An unreacted oxazoline group present in a coating layer can react with a carboxylic acid terminal that is generated by hydrolysis of a base film and the coating layer, thereby forming crosslinks.

The method for forming the adhesion layer is not particularly limited, and, for example, conventionally known methods such as coating methods can be adopted. Examples of suitable methods among the coating methods include an off-line coating method and an in-line coating method. For example, in the case with an in-line coating method which is executed in a step of producing a base film, as conditions for drying and heat treatment at the time of coating, although depending on a coating thickness or conditions of an apparatus, it is preferable to send the base film to a stretching step in a perpendicular direction immediately after coating and to perform drying in a pre-heating zone or a stretching zone in the stretching step. In such a case, normally, the temperature is preferably set to about 50 to 250°C.

In order to use the biaxially-stretched polyester film of the present invention as a packaging material, a laminated body having a heat-sealable resin layer called a sealant laminated thereon is often used.

In order to obtain a laminated body, a layer formed from another material such as a heat-sealable resin layer may be laminated on the biaxially-stretched polyester film. As a method therefor, the layer formed from another material such as a heat-sealable resin layer can be attached after production of the biaxially-stretched polyester film of the present invention, or can be laminated in a process for producing the biaxially-stretched polyester film. Formation of the heat-sealable resin layer is normally performed by an extrusion laminate method or a dry laminate method.

A thermoplastic polymer for forming the heat-sealable resin layer may be any polymer that can sufficiently exhibit sealant adhesiveness, and polyethylene resins such as HDPE, LDPE, and LLDPE, polypropylene resins, ethylene-vinyl acetate copolymers, ethylene-$\alpha$-olefin random copolymers, ionomer resins, etc., can be used. Among them, as polymers having heat resistance to retorting, polypropylene resins are preferable.

In the laminated body of the present invention, the total amount of 1,4-butanediol and THF that transfer into a bag after heating at a temperature of 135°C for 60 minutes is preferably not more than 1000 ppb and more preferably not more than 800 ppb.

The laminated body according to the present invention is preferably a laminated body obtained by: laminating a heat-sealable resin layer on the surface, at an inorganic thin film layer side, of a laminated film obtained by providing an inorganic thin film layer on at least one surface of the biaxially-stretched polyester film; and laminating another thermoplastic resin layer on the surface, opposite to the inorganic thin film layer side, of the laminated film.

As the other thermoplastic resin layer, a film that is obtained by melt-extruding a thermoplastic resin and performing stretching in the longitudinal direction and/or the width direction, cooling, and thermo-setting as necessary, can be used. Examples of plastics include: polyamides represented by nylon 4/6, nylon 6, nylon 6/6, nylon 12, etc.; polyesters represented by polyethylene terephthalate, polybutylene terephthalate, polyethylene-2,6-naphthalate, etc.; and polyolefins represented by polyethylene, polypropylene, polybutene, etc., and also include polyvinyl chloride, polyvinylidene chloride, polyvinyl alcohol, all aromatic polyamides, polyamide imide, polyimide, polyether imide, polysulfone, polystyrene, and polylactic acid. Among them, from the standpoint of heat resistance, dimensional stability, and transparency, polyesters are preferable, and polyethylene terephthalate or a copolymer obtained by copolymerizing polyethylene terephthalate with another component is particularly preferable.

In the case where a conventional biaxially-stretched polybutylene terephthalate film having an inorganic deposition layer laminated thereon is used with the above configuration, since the inorganic deposition layer has excellent gas barrier properties, there is a possibility that 1,4-butanediol and tetrahydrofuran that is generated from the inside of the polybutylene terephthalate film does not come out of the bag, resulting in an increase in the amount of 1,4-butanediol and tetrahydrofuran that transfers to contents in the bag.

Meanwhile, in the biaxially-stretched polyester film of the present invention, the amount of THF and 1,4-butanediol generated in retorting is also small. Thus, in the case where the biaxially-stretched polyester film of the present invention is used with such a configuration, the amount of 1,4-butanediol and tetrahydrofuran that transfers to contents even after retorting is considered to be able to be reduced.

Regarding the pinhole resistance of the laminated body of the present invention, the number of pinholes is preferably not more than 20, more preferably not more than 10, and most preferably not more than 6. The method for measuring the pinhole resistance will be described below.

The laminated body is cut in a size of 20.3 cm (8 inches) × 27.9 cm (11 inches), and the obtained rectangular test film after the cutting is left to stand for more than 24 hours under the conditions of a temperature of 23°C and a relative humidity of 50% for conditioning. Thereafter, the rectangular test film is rolled into a cylindrical shape with a length of 20.32 cm (8 inches). Then, one end of the cylindrical film is fixed to the outer circumference of a disk-shaped fixed head of a Gelbo flex tester (NO. 901 Model, manufactured by Rigaku Industrial Corporation) (according to the standard of MIL-B-131C) and the other end of the cylindrical film is fixed to the outer circumference of a disk-shaped movable head, of the tester, which is set opposite to the fixed head at an interval of 17.8 cm (7 inches).

Then, a bending test is performed by continuously repeating 2000 cycles at a speed of 40 cycles/min, each of which is carried out by rotating the movable head by 440° while moving the movable head closer to the fixed head by 7.6 cm (3.5 inches) along the axis of both heads set opposite to each other in parallel, subsequently moving the movable head straight by 6.4 cm (2.5 inches) without rotating the movable head, and executing these movements reversely to return the movable head back to the initial position. The test is performed at 5°C.

Thereafter, the number of pinholes generated in a portion of the tested film of 17.8 cm (7 inches) × 27.9 cm (11 inches) excluding the parts fixed to the outer circumferences of the fixed head and the movable head is measured (that is, the number of pinholes generated in 497 cm² (77 square inches) is measured).

Regarding the bag breakage resistance of the laminated body of the present invention, the number of drops is preferably not less than 30 times, more preferably not less than 40 times, further preferably not less than 50 times, and most preferably not less than 60 times. The method for measuring the bag breakage resistance will be described below.

The laminated body is cut into the size of a 15 cm square, two cut pieces are laminated such that the sealant is located at the inner side, and three sides of the resultant laminate are heat-sealed at a sealing temperature of 160°C and a sealing width of 1.0 cm, to obtain a three-side-sealed bag having internal dimensions of 13 cm.

The obtained three-side-sealed bag is filled with 250 mL of water, and the fourth side thereof is closed by heat-sealing, to produce a four-side-sealed bag filled with water.

The obtained four-side-sealed bag is dropped from a position having a height of 100 cm onto a concrete plate in an environment having a room temperature of 5°C and a humidity of 35% RH, and the number of drops until breakage or until a pinhole occurs is counted.

The oxygen permeability of the laminated body of the present invention is preferably not more than 10 ml/m²·day·MPa. The method for measuring the oxygen permeability will be described below.

The oxygen permeability is measured according to the A method in JIS K7126-2 using an oxygen permeability measurement device ("OX-TRAN 2/21"; manufactured by MOCON Inc.) under the conditions of 23°C and 65% RH. The measurement is performed in a direction in which oxygen permeates from the base film side at which the inorganic thin film layer is not laminated, to the inorganic thin film layer side.

The water vapor permeability of the laminated body of the present invention is preferably not more than 8 g/m²·day. The method for measuring the water vapor permeability will be described below.

The water vapor permeability is measured according to the B method in JIS K7129 using a water vapor permeability measurement device ("PERMATRAN-W 3/31"; manufactured by MOCON Inc.) under the conditions of 40°C and 90% RH. The measurement is performed in a direction in which oxygen permeates from the base film side at which the inorganic thin film layer is not laminated, to the inorganic thin film layer side.

EXAMPLES

Hereinafter, the present invention will be described in more detail by way of examples, but is not limited to the examples described below. Films were evaluated by the following measurement methods.

[Thickness of Film]

The thickness of a film was measured according to the A method in JIS K7130-1999 using a dial gauge.

[Haze]

Measurements were made at three different locations on a sample using a haze meter (NDH2000, manufactured by NIPPON DENSHOKU INDUSTRIES CO., LTD.) by a method complying with JIS-K-7105, and the average of the measurement values was regarded as a haze.

The unit is [%].

[Thickness Accuracy (Tv (%))]

A film piece was cut out in the longitudinal direction from a center portion of an obtained film roll, and thicknesses were measured at 100 locations on the film piece at pitches of 5 cm using a dial gauge. Then, where the maximum thickness was denoted by Tmax, the minimum thickness was denoted by Tmin, and the average thickness was denoted by Tave, the thickness accuracy (Tv) was obtained by equation (1) below.

$$\mathrm{Tv(\%) = \{(Tmax{-}Tmin)/Tave\}{\times}100\ (\%)}\qquad(1)$$

[Amount of Low-Molecular-Weight Component Generated from Film]

A method for measuring the amount of a low-molecular-weight component generated from an obtained film will be described below.

20 mg of an obtained film was put into a heating/desorption device (MSTD-258M, manufactured by GL Sciences Inc.). A gas component generated during heating at a temperature of 135°C for 60 minutes was collected with a collection pipe and introduced to a concentration/introduction device (CP-4020, manufactured by GL Sciences Inc.), and then a TIC chromatogram of the generated gas was obtained using a gas chromatograph-mass spectrometer.

Device: HP-7890/HP-5975 (Agilent)
Column: Rxi-lms (length: 30 ms, inner diameter: 0.25 mm, film thickness: 1.0 $\mu$m)
Inlet temperature: 250°C
Oven temperature: 50°C (2 minutes), 10°C/min, 250°C (2 minutes)
Column flow rate: 1 mL/min, Split ratio: 20

Component concentrations were obtained at peak intensities attributed to 1,4-butanediol and THF in the above TIC chromatogram of the sample on the basis of a calibration curve showing a relationship between the respective component concentrations and peak intensities obtained in advance from TIC chromatograms of known amounts of 1,4-butanediol and THF.

[Plane Orientation Coefficient of Film]

For a sample, the refractive index (nx) in the longitudinal direction of the film and the refractive index (ny) in the width direction of the film were measured by the A method in JIS K 7142-1996 with sodium D-rays as a light source using an Abbe's refractometer, and the plane orientation coefficient was calculated by a calculation equation (2).

$$\text{Plane orientation coefficient } (\Delta P) = (nx{+}ny)/2{-}nz\qquad(2)$$

[Piercing Strength]

The piercing strength was measured according to "2. Testing methods for strength, etc." in "Standards for food, additives, etc. Chapter III: Apparatus and Containers and Packaging" (Notification No. 20 of the Ministry of Health and Welfare, 1982) in the Food Hygiene Act. The film was stuck with a needle having a tip diameter of 0.7 mm at a sticking speed of 50 mm/minute, and the strength at the time when the needle penetrated the film was measured and regarded as the piercing strength. The measurement was performed at normal temperature (23°C), and the unit is [N/$\mu$m].

[Impact Strength]

The strength of the film in an environment at 23°C against impact punching was measured according to JIS K7160-1996 using an impact tester manufactured by TOYO SEIKI SEISAKU-SHO, LTD. As an impact sphere, a sphere with a diameter of 1/2 inches was used. The unit is $J/\mu m$.

[Thermal Shrinkage]

The thermal shrinkage of a polyester film was measured by the dimensional change testing method described in JIS-C-2151-2006.21, except that the test temperature was set to 150°C and the heating time was set to 15 minutes.
A test piece was used according to the description at 21.1(a).

[Production of Laminated Body for Evaluation (1)]

A composite oxide layer of silicon dioxide and aluminum oxide was formed as an inorganic thin film layer on one surface of each of biaxially-stretched polybutylene terephthalate films obtained in Examples 1-1 to 1-9 and Comparative Examples of 1-1 to 1-4 described later, by an electron beam vapor deposition method. Particulate $SiO_2$ (purity 99.9%) and $Al_2O_3$ (purity 99.9%) having a size of about 3 mm to 5 mm were used as a vapor deposition source. The film thickness of the inorganic thin film layer ($SiO_2/Al_2O_3$ composite oxide layer) obtained as described above was 13 nm. In addition, the composition of the composite oxide layer was $SiO_2/Al_2O_3$ (mass ratio) = 60/40.
Furthermore, an un-stretched polypropylene film ("P1147", manufactured by Toyobo Co., Ltd.) having a thickness of 70 $\mu m$ was attached as a heat-sealable resin layer onto the inorganic thin film by a dry laminate method using a urethane-based two-component curing type adhesive (obtained by blending "Takelac (registered trademark) A525S" and "Takenate (registered trademark) A50", manufactured by Mitsui Chemicals Inc., at a ratio of 13.5:1 (mass ratio)), and the resultant laminated body was subjected to aging at 40°C for 4 days to obtain a gas barrier laminated body for evaluation. Each adhesive layer formed from the urethane-based two-component curing type adhesive had a thickness of about 4 $\mu m$ after drying.

[Production of Laminated Body for Evaluation (2)]

A composite oxide layer of silicon dioxide and aluminum oxide was formed as an inorganic thin film layer on one surface of each of biaxially-stretched polybutylene terephthalate films obtained in Example 1-1 and Comparative Example 1-3 described later, by an electron beam vapor deposition method. Particulate $SiO_2$ (purity 99.9%) and $Al_2O_3$ (purity 99.9%) having a size of about 3 mm to 5 mm were used as a vapor deposition source. The film thickness of the inorganic thin film layer ($SiO_2/Al_2O_3$ composite oxide layer) obtained as described above was 13 nm. In addition, the composition of the composite oxide layer was $SiO_2/Al_2O_3$ (mass ratio) = 60/40.
Furthermore, a biaxially-stretched polyethylene terephthalate film ("E5102", manufactured by Toyobo Co., Ltd.) having a thickness of 12 $\mu m$ was attached as a thermoplastic film onto the inorganic thin film layer by a dry laminate method using a urethane-based two-component curing type adhesive (obtained by blending "Takelac (registered trademark) A525S" and "Takenate (registered trademark) A50", manufactured by Mitsui Chemicals Inc., at a ratio of 13.5:1 (mass ratio)), then an un-stretched polypropylene film ("P1147", manufactured by Toyobo Co., Ltd.) having a thickness of 70 $\mu m$ was attached as a heat-sealable resin layer onto the opposite surface using the same adhesive, and the resultant laminated body was subjected to aging at 40°C for 4 days to obtain a gas barrier laminated body for evaluation.

[Production of Laminated Body for Evaluation (3)]

An un-stretched polypropylene film ("P1147", manufactured by Toyobo Co., Ltd.) having a thickness of 70 $\mu m$ was attached as a heat-sealable resin layer onto each of biaxially-stretched polybutylene terephthalate films obtained in Examples 2-1 to 2-6 and Comparative Examples 2-1 to 2-4 described below by a dry laminate method using a urethane-based two-component curing type adhesive (obtained by blending "Takelac (registered trademark) A525S" and "Takenate (registered trademark) A50", manufactured by Mitsui Chemicals Inc., at a ratio of 13.5:1 (mass ratio)), and the resultant laminated body was subjected to aging at 40°C for 4 days to obtain a gas barrier laminated body for evaluation. Each adhesive layer formed from the urethane-based two-component curing type adhesive had a thickness of about 4 $\mu m$ after drying.

[Pinhole Resistance]

Each of the above-described laminated bodies was cut in a size of 20.3 cm (8 inches) $\times$ 27.9 cm (11 inches), and the obtained rectangular test laminated body after the cutting was left to stand for more than 24 hours under the conditions of a temperature of 23°C and a relative humidity of 50% for conditioning. Thereafter, the rectangular test laminated body was rolled into a cylindrical shape with a length of 20.32 cm (8 inches). Then, one end of the cylindrical laminated body was fixed to the outer circumference of a disk-shaped fixed head of a Gelbo flex tester (NO. 901 Model, manufactured by Rigaku Industrial Corporation) (according to the standard of MIL-B-131C) and the other end of the cylindrical laminated body was fixed to the outer circumference of a disk-shaped movable head, of the tester, which was set opposite to the fixed head at an interval of 17.8 cm (7 inches).

Then, a bending test was performed by continuously repeating 2000 cycles at a speed of 40 cycles/min, each of which was carried out by rotating the movable head by 440° while moving the movable head closer to the fixed head by 7.6 cm (3.5 inches) along the axis of both heads set opposite to each other in parallel, subsequently moving the movable head straight by 6.4 cm (2.5 inches) without rotating the movable head, and executing these movements reversely to return the movable head back to the initial position. The test was performed at 5°C.

Thereafter, the number of pinholes generated in a portion of the tested film of 17.8 cm (7 inches) $\times$ 27.9 cm (11 inches) excluding the parts fixed to the outer circumferences of the fixed head and the movable head was measured (that is, the number of pinholes generated in 497 cm$^2$ (77 square inches) was measured).

[Bag Breakage Resistance]

Each of the above-described laminated bodies was cut into the size of a 15 cm square, two cut pieces were laminated such that the sealant was located at the inner side, and three sides of the resultant laminate were heat-sealed at a sealing temperature of 160°C and a sealing width of 1.0 cm, to obtain a three-side-sealed bag having internal dimensions of 13 cm.

The obtained three-side-sealed bag was filled with 250 mL of water, and the fourth side thereof was closed by heat-sealing, to produce a four-side-sealed bag filled with water.

The obtained four-side-sealed bag was dropped from a position having a height of 100 cm onto a concrete plate in an environment having a room temperature of 5°C and a humidity of 35% RH, and the number of drops until breakage or a pinhole occurred was counted.

[Aroma Retention Properties]

Each of the above-described laminated bodies was cut into the size of a 15 cm square, two cut pieces were laminated such that the sealant was located at the inner side, and three sides of the resultant laminate were heat-sealed at a sealing temperature of 160°C and a sealing width of 1.0 cm, to obtain a three-side-sealed bag having internal dimensions of 13 cm.

The obtained three-side-sealed bag was filled ith ion exchanged water, the remaining one side was similarly heat-sealed, and then retorting was performed at 135°C for 1 hour using a retorting machine. Thereafter, the bag was kept at 80°C for 1 week. 30 panelists conducted a sampling test by drinking using the immersion liquid in the bag and made a comparison with ion exchanged water for comparison. The case where the number of persons who felt that the taste was changed as compared to the ion exchanged water for comparison was 3 or less persons among the 30 persons was determined as o, the case where such a number of persons was 4 to 10 persons was determined as Δ, and the case where such a number of persons was 11 or more persons was determined as ×.

[Oxygen Permeability]

For each of the above-described laminated bodies, the oxygen permeability was measured according to the A method in JIS K7126-2 using an oxygen permeability measurement device ("OX-TRAN 2/21"; manufactured by MOCON Inc.) under the conditions of 23°C and 65% RH. The measurement was performed in a direction in which oxygen permeated from the base film side at which the inorganic thin film layer was not laminated, to the inorganic thin film layer side.

In addition, each of the above-described laminated bodies was cut into the size of a 15 cm square, two cut pieces were laminated such that the sealant was located at the inner side, and three sides of the resultant laminate were heat-sealed at a sealing temperature of 160°C and a sealing width of 1.0 cm, to obtain a three-side-sealed bag having internal dimensions of 13 cm.

The obtained three-side-sealed bag was filled with ion exchanged water, the remaining one side was similarly heat-sealed, and then retorting was performed at 135°C for 1 hour using a retorting machine. Thereafter, the same measurement was also performed.

[Water Vapor Permeability]

For each of the above-described laminated bodies, the water vapor permeability was measured according to the B method in JIS K7129 using a water vapor permeability measurement device ("PERMATRAN-W 3/31"; manufactured by MOCON Inc.) under the conditions of 40°C and 90% RH. The measurement was performed in a direction in which oxygen permeated from the base film side at which the inorganic thin film layer was not laminated, to the inorganic thin film layer side.

In addition, each of the above-described laminated bodies was cut into the size of a 15 cm square, two cut pieces were laminated such that the sealant was located at the inner side, and three sides of the resultant laminate were heat-sealed at a sealing temperature of 160°C and a sealing width of 1.0 cm, to obtain a three-side-sealed bag having internal dimensions of 13 cm.

The obtained three-side-sealed bag was filled with ion exchanged water, the remaining one side was similarly heat-sealed, and then retorting was performed at 135°C for 1 hour using a retorting machine. Thereafter, the same measurement was also performed.

Examples 1-1 to 1-10 and Comparative Examples 1-1 to 1-5 will be described.

[Raw Material Resin]

(Polybutylene Terephthalate Resin 1-1; Examples 1-1 to 1-9, Comparative Examples 1-1 to 1-4)

In production of films of Examples 1-1 to 1-9 and Comparative Examples 1-1 to 1-4 described later, 1100-211XG (CHANG CHUN PLASTICS CO., LTD., intrinsic viscosity: 1.28 dl/g) was used as a polybutylene terephthalate resin that is a main raw material.

(Polybutylene Terephthalate Resin 1-2; Examples 1-6, 1-9)

A resin composition containing 0.2% by weight of antioxidant Irganox 1010 in the polybutylene terephthalate resin 1-1 was produced as a polybutylene terephthalate resin 1-2 and regarded as a master batch.

[Resin (A-1) Having Oxazoline Group]

Each material used for forming a coating layer was prepared as described below.

460.6 parts of isopropyl alcohol was put into a flask provided with an agitator, a reflux condenser, a nitrogen introducing pipe, and a thermometer, and was heated to 80°C while causing nitrogen gas to gently flow thereinto. A monomer mixture prepared beforehand containing 126 parts of methyl methacrylate, 210 parts of 2-isopropenyl-2-oxazoline, and 84 parts of methoxy polyethylene glycol acrylate, and an initiator solution prepared beforehand containing 21 parts of 2,2'-azobis(2-methylbutyronitrile) ("ABN-E", manufactured by Japan Finechem Inc.), which is a polymerization initiator, and 189 parts of isopropyl alcohol, were dropped from dropping funnels, respectively, over 2 hours to cause reaction. Also, after the end of dropping, the reaction continued to be carried out for 5 hours.

The flow of nitrogen gas was continued during the reaction, and the temperature in the flask was kept at $80 \pm 1$°C. Thereafter, the reaction solution was cooled, and the obtained polymer was dissolved in ion exchanged water to obtain a resin (A-1) having a solid content concentration of 25% and having an oxazoline group. The oxazoline group amount of the obtained resin (A-1) having an oxazoline group was 4.3 mmol/g, and the number-average molecular weight thereof measured by GPC (gel permeation chromatography) was 20000.

(Acrylic Resin (B-1))

As an acrylic resin, a commercially available emulsion of 25% by mass of an acrylic acid ester copolymer ("Mowinyl (registered trademark) 7980", manufactured by the Nippon Synthetic Chemical Industry Co., Ltd.) was prepared. The acid value (theoretical value) of the acrylic resin (B-1) was 4 mg KOH/g.

[Urethane Resin (C-1)]

72.96 parts of 1,3-bis(isocyanatomethyl)cyclohexane, 12.60 parts of dimethylol propionic acid, 11.74 parts of neopentyl glycol, 112.70 parts of polyester diol having a number-average molecular weight of 2000, and 85.00 parts of acetonitrile and 5.00 parts of N-methyl pyrrolidone as solvents were put into a four-neck flask provided with an agitator, a Dimroth condenser, a nitrogen introducing pipe, a silica gel drying pipe, and a thermometer, and were agitated under a nitrogen atmosphere at 75°C for 3 hours, and it was confirmed that the reaction solution reached a predetermined amine equivalent. Next, the temperature of the reaction solution was decreased to 40°C, and then 9.03 parts of triethylamine was added to the reaction solution to obtain a polyurethane prepolymer solution (isocyanate-group-terminated prepolymer).

Next, 450 parts of water was added to a reaction vessel provided with a homodisper capable of high-speed agitation, and was adjusted to 25°C, and the total amount of the polyurethane prepolymer solution (isocyanate-group-terminated prepolymer) obtained above was added to the reaction vessel and dispersed in water with agitation for mixing at 2000 min-1. Thereafter, acetonitrile and part of water were removed under reduced pressure, thereby preparing a water-soluble polyurethane resin (C-1) having a solid content concentration of 30%. The acid value (theoretical value) of the obtained urethane resin (C-1) was 25 mg KOH/g.

[Preparation of Application Liquid (Resin Composition for Adhesion Layer)]

Each material was mixed at a blending ratio described below to prepare an application liquid (resin composition for a coating layer). The mass ratio, on a solid content basis, of the resin having an oxazoline group, the acrylic resin, and the urethane resin in the obtained application liquid is as shown in Table 1.

| | |
|---|---|
| Water | 67.53% by mass |
| Isopropanol | 5.00% by mass |
| Resin (A-2) having an oxazoline group | 20.00% by mass |
| Acrylic resin (B-1) | 4.80% by mass |
| Urethane resin (C-1) | 2.67% by mass |

[Example 1-1]

A mixture obtained by blending the polybutylene terephthalate resin 1-1, a polyethylene terephthalate resin formed from terephthalic acid and ethylene glycol such that the ratio thereof was terephthalic acid//ethylene glycol = 100//100 (mol%) and having an intrinsic viscosity of 0.62 dl/g, and silica particles having an average particle size of 2.4 $\mu$m as inactive particles such that the silica concentration was 1600 ppm, was melted at 290°C using a single screw extruder, and then was introduced to the melt line with a static mixer having 12 elements. Accordingly, the polybutylene terephthalate melted body was divided and laminated to obtain a multi-layer melted body formed of the same raw materials. The melted body was cast from a T-die at 265°C and brought into close contact with a cooling roll at 15°C by an electrostatic adhesion method to obtain an un-stretched sheet.

Next, the un-stretched sheet was subjected to 3.0 times roll stretching at 60°C in the machine direction (MD) and then subjected to 4.0 times stretching at 90°C in the transverse direction (TD) by passing the sheet through a tenter. The sheet was subjected to a heat treatment under tension at 210°C for 3 seconds and to a relaxation treatment by 5% for 1 second. Thereafter, gripping parts at both ends were cut and removed by 10% each to obtain a mill roll of a polybutylene terephthalate film having a thickness of 15 $\mu$m. The film production conditions, physical properties, and evaluation results of the obtained film are shown in Table 1.

[Examples 1-2 to 1-7]

The same procedures as those in Example 1-1 were carried out except that the raw material composition and the film production conditions in Example 1-1 were changed to those for the biaxially-stretched films described in Tables 1 and 2.

[Example 1-8]

The same procedures as those in Example 1-1 were carried out except that the raw material composition and the film production conditions in Example 1-1 were changed to those for the biaxially-stretched film described in Table 2.

Specifically, in the biaxially-stretched film forming step described in Example 1-1, after MD stretching, the application liquid (resin composition for an adhesion layer) was applied by a fountain bar coating method. Thereafter, the sheet was led to a tenter while being dried, and was dried at a pre-heating temperature of 70°C to volatilize the solvent. Next, the sheet was subjected to 4.0 times stretching in the transverse direction at a temperature of 90°C, and was subjected to a thermo-setting treatment at 210°C with relaxation by 5% in the transverse direction, thereby obtaining a two-layer film (plastic base film/coating layer) in which a coating layer was formed on one surface of a biaxially-stretched polyester film (plastic base film) having a thickness of 15 $\mu$m.

[Example 1-9]

The same procedures as those in Example 1-1 were carried out except that the raw material composition and the film production conditions in Example 1-1 were changed to those for the biaxially-stretched film described in Table 2.

Specifically, in the biaxially-stretched film forming step described in Example 1-6, after MD stretching, the application liquid (resin composition for an adhesion layer) was applied by a fountain bar coating method. Thereafter, the sheet was led to a tenter while being dried, and was dried at a pre-heating temperature of 70°C to volatilize the solvent. Next, the sheet was subjected to 4.0 times stretching in the transverse direction at a temperature of 90°C, and was subjected to a thermo-setting treatment at 210°C with relaxation by 5% in the transverse direction, thereby obtaining a two-layer film in which a coating layer was formed on one surface of a biaxially-stretched polyester film having a thickness of 15 $\mu$m.

[Comparative Examples 1-1 to 1-4]

The same procedures as those in Example 1-1 were carried out except that the raw material composition and the film production conditions in Example 1-1 were changed to those for the biaxially-stretched film described in Table 3.

The film production conditions, physical properties, and evaluation results of the obtained film are shown in Table 3.

As shown in Table 1, the biaxially-stretched polybutylene terephthalate films (Examples 1-1 to 1-9) obtained by the present invention had excellent impact resistance and piercing resistance and were also obtained as films having a less amount of 1,4-butanediol and tetrahydrofuran generated even after heating at 135°C corresponding to a retorting temperature.

In addition, as shown in Tables 1 and 2, the laminated bodies for which the biaxially-stretched polybutylene terephthalate films of Examples 1-1 to 1-9 were used had excellent oxygen barrier properties, water vapor barrier properties even after retorting, and had excellent pinhole resistance, bag breakage resistance, and aroma retention properties at the same time.

Meanwhile, as shown in Table 3, in Comparative Example 1-1, when the amount of PET contained in the film was large, the impact strength and the piercing strength decreased, so that the pinhole resistance and the bag breakage resistance were insufficient.

In addition, as shown in Comparative Example 1-2, when the extrusion temperature during film production was high, the amount of a low-molecular-weight component in the film increased due to pyrolysis of the resin, and the amount of the low-molecular-weight component generated after heating of the film increased.

Moreover, as shown in Comparative Example 1-3, when the thermo-setting treatment during film production was low, a low-molecular-weight component generated in the extrusion step was not sufficiently removed, and thus the amount of the low-molecular-weight component generated from the film increased.

Furthermore, as shown in Comparative Example 1-4, when the stretching ratio was low, since the degree of plane orientation was not increased, the impact strength and the piercing resistance of the film deteriorated, and the thickness accuracy was also poor, so that intended characteristics were not satisfied.

Furthermore, as shown in Table 4, the laminated body for which the biaxially-stretched polybutylene terephthalate film of Example 1-10 was used had excellent pinhole resistance, bag breakage resistance, and aroma retention properties, since the amount of tetrahydrofuran and 1,4-butanediol generated from the film was small, although the laminated body had a configuration in which a sealant was laminated on one surface and a thermoplastic film was laminated on the opposite surface.

[Table 1]

| | | | Unit | Example 1-1 | Example 1-2 | Example 1-3 | Example 1-4 | Example 1-5 |
|---|---|---|---|---|---|---|---|---|
| Raw material | | Polybutylene terephthalate resin 1-1 | % by mass | 70 | 70 | 60 | 90 | 70 |
| | | Polybutylene terephthalate resin 1-2 | % by mass | 0 | 0 | 0 | 0 | 0 |
| | | Polyethylene terephthalate resin | % by mass | 30 | 30 | 40 | 10 | 30 |
| | | Amount of antioxidant and additives added in entire raw material | % by mass | 0 | 0 | 0 | 0 | 0 |
| Film production conditions | | Die temperature | °C | 265 | 280 | 265 | 265 | 265 |
| | | Presence/absence of super multi-layering | - | Presence | Presence | Presence | Presence | Presence |
| | | Cooling roll temperature | °C | 25 | 25 | 25 | 15 | 25 |
| | | MD stretching temperature | °C | 70 | 70 | 70 | 70 | 70 |
| | | MD stretching ratio | times | 3 | 3 | 3 | 3 | 3 |
| | | TD stretching temperature | °C | 90 | 90 | 90 | 90 | 90 |
| | | TD stretching ratio | times | 4 | 4 | 4 | 4 | 4 |
| | | Thermo-Setting temperature | °C | 205 | 205 | 205 | 205 | 210 |
| | | Relaxation rate | % | 5 | 5 | 5 | 5 | 5 |
| | | Adhesion layer | - | - | - | - | - | - |
| Film physical properties | | Thickness | μm | 15 | 15 | 15 | 15 | 15 |
| | | Thickness accuracy | % | 7 | 8 | 6 | 8 | 6 |
| | | MD thermal shrinkage | % | 0.9 | 0.8 | 0.78 | 1.1 | 0.5 |
| | | TD thermal shrinkage | % | 1.41 | 1.41 | 1.4 | 1.49 | 1.3 |
| | | Plane orientation coefficient | - | 0.141 | 0.141 | 0.138 | 0.148 | 0.139 |
| | | Impact strength | J/μm | 0.055 | 0.053 | 0.051 | 0.068 | 0.051 |
| | | Piercing strength | N/μm | 0.89 | 0.88 | 0.87 | 1.01 | 0.87 |
| | Low-molecular-weight component generated amount | THF | ppb | 50 | 55 | 43 | 64 | 49 |
| | | 1,4-butanediol | ppb | 1310 | 1410 | 1120 | 1680 | 1290 |
| | | Total | ppb | 1360 | 1465 | 1163 | 1744 | 1339 |
| Laminated body configuration | | Biaxially stretched polybutylene terephthalate film | - | The above film | The above film | The above film | The above film | The above film |
| | | Heat-seal layer | - | Un-stretched polypropylene film | Same as on the left | Same as on the left | Same as on the left | Same as on the left |
| Laminated body physical properties | Barrier properties | Before retorting | Oxygen permeability | ml/m$^2$·day·MPa | 9 | 10 | 9 | 10 | 9 |
| | | | Water vapor permeability | g/m$^2$·day | 2.1 | 2.2 | 2 | 2.1 | 1.9 |
| | | After retorting | Oxygen permeability | ml/m$^2$·day·Mpa | 12 | 13 | 11 | 13 | 10 |
| | | | Water vapor permeability | g/m$^2$·day | 5 | 6 | 4 | 7 | 4 |
| | Pinhole resistance | | number | 5 | 8 | 10 | 3 | 7 |
| | Bag breakage resistance | | times | 50 | 37 | 32 | 61 | 41 |
| | Aroma retention properties | | - | O | O | O | O | O |

[Table 2]

| | | | Unit | Example 1-6 | Example 1-7 | Example 1-8 | Example 1-9 |
|---|---|---|---|---|---|---|---|
| Raw material | | Polybutylene terephthalate resin 1-1 | % by mass | 65 | 70 | 70 | 65 |
| | | Polybutylene terephthalate resin 1-2 | % by mass | 5 | 0 | 0 | 5 |
| | | Polyethylene terephthalate resin | % by mass | 30 | 30 | 30 | 30 |
| | | Amount of antioxidant and additives added in entire raw material | % by mass | 0.01 | 0 | 0 | 0.01 |
| Film production conditions | | Die temperature | °C | 295 | 265 | 265 | 295 |
| | | Presence/absence of super multi-layering | - | Presence | Presence | Presence | Presence |
| | | Cooling roll temperature | °C | 25 | 25 | 25 | 25 |
| | | MD stretching temperature | °C | 70 | 70 | 70 | 70 |
| | | MD stretching ratio | times | 3 | 3.4 | 3 | 3 |
| | | TD stretching temperature | °C | 90 | 90 | 90 | 90 |
| | | TD stretching ratio | times | 4 | 4 | 4 | 4 |
| | | Thermo-Setting temperature | °C | 205 | 205 | 205 | 208 |
| | | Relaxation rate | % | 5 | 5 | 5 | 5 |
| | | Adhesion layer | - | - | - | Presence | Presence |
| Film physical properties | | Thickness | µm | 15 | 15 | 15 | 15 |
| | | Thickness accuracy | % | 7 | 5 | 7 | 7 |
| | | MD thermal shrinkage | % | 0.8 | 1.2 | 0.8 | 0.8 |
| | | TD thermal shrinkage | % | 1.41 | 1.43 | 1.41 | 1.41 |
| | | Plane orientation coefficient | - | 0.141 | 0.149 | 0.141 | 0.141 |
| | | Impact strength | J/µm | 0.053 | 0.069 | 0.053 | 0.053 |
| | | Piercing strength | N/µm | 0.89 | 1.02 | 0.89 | 0.89 |
| | Low-molecular-weight component generated amount | THF | ppb | 49 | 51 | 50 | 49 |
| | | 1,4-butanediol | ppb | 1300 | 1300 | 1310 | 1290 |
| | | Total | ppb | 1349 | 1351 | 1360 | 1339 |
| Laminated body configuration | | Biaxially stretched polybutylene terephthalate film | - | The above film | The above film | The above film | The above film |
| | | Heat-seal layer | - | Same as on the left | Same as on the left | Same as on the left | Same as on the left |
| Laminated body physical properties | Barrier properties | Before retorting — Oxygen permeability | ml/m²·day·MPa | 8 | 9 | 8 | 8 |
| | | Before retorting — Water vapor permeability | g/m²·day | 2 | 2.1 | 2.1 | 2 |
| | | After retorting — Oxygen permeability | ml/m²·day·Mpa | 9 | 12 | 9 | 8 |
| | | After retorting — Water vapor permeability | g/m²·day | 3 | 4 | 2.3 | 2.1 |
| | | Pinhole resistance | number | 5 | 6 | 5 | 5 |
| | | Bag breakage resistance | times | 53 | 59 | 51 | 52 |
| | | Aroma retention properties | - | O | O | O | O |

EP 3 406 421 B1

19

[Table 3]

| | | | Unit | Comparative Example 1-1 | Comparative Example 1-2 | Comparative Example 1-3 | Comparative Example 1-4 |
|---|---|---|---|---|---|---|---|
| Raw material | | Polybutylene terephthalate resin 1-1 | % by mass | 50 | 70 | 70 | 70 |
| | | Polybutylene terephthalate resin 1-2 | % by mass | 0 | 0 | 0 | 0 |
| | | Polyethylene terephthalate resin | % by mass | 50 | 30 | 30 | 30 |
| | | Amount of antioxidant and additives added in entire raw material | % by mass | 0 | 0 | 0 | 0 |
| Film production conditions | | Die temperature | °C | 265 | 295 | 270 | 265 |
| | | Presence/absence of super multi-layering | - | Presence | Presence | Presence | Presence |
| | | Cooling roll temperature | °C | 25 | 25 | 25 | 25 |
| | | MD stretching temperature | °C | 70 | 70 | 70 | 70 |
| | | MD stretching ratio | times | 2.8 | 3 | 3 | 2.2 |
| | | TD stretching temperature | °C | 90 | 90 | 90 | 90 |
| | | TD stretching ratio | times | 4 | 4 | 4 | 3 |
| | | Thermo-Setting temperature | °C | 208 | 205 | 180 | 208 |
| | | Relaxation rate | % | 5 | 5 | 1 | 5 |
| | | Adhesion layer | - | - | - | - | - |
| Film physical properties | | Thickness | μm | 15 | 15 | 15 | 15 |
| | | Thickness accuracy | % | 6 | 7 | 10 | 25 |
| | | MD thermal shrinkage | % | 0.91 | 0.9 | 5 | 0.5 |
| | | TD thermal shrinkage | % | 1.41 | 1.42 | 3 | 1.4 |
| | | Plane orientation coefficient | - | 0.135 | 0.141 | 0.148 | 0.060 |
| | | Impact strength | J/μm | 0.048 | 0.047 | 0.067 | 0.031 |
| | | Piercing strength | N/μm | 0.856 | 0.8 | 0.97 | 0.3 |
| | Low-molecular-weight component generated amount | THF | ppb | 36 | 104 | 107 | 51 |
| | | 1,4-butanediol | ppb | 940 | 2110 | 2200 | 1320 |
| | | Total | ppb | 976 | 2214 | 2307 | 1371 |
| Laminated body configuration | | Biaxially stretched polybutylene terephthalate film | - | The above film | The above film | The above film | The above film |
| | | Heat-seal layer | - | Un-stretched polypropylene film | Same as on the left | Same as on the left | Same as on the left |
| Laminated body physical properties | Barrier properties | Before retorting — Oxygen permeability | ml/m²·day·MPa | 9 | 10 | 21 | 15 |
| | | Before retorting — Water vapor permeability | g/m²·day | 2.1 | 2.2 | 3.5 | 2.5 |
| | | After retorting — Oxygen permeability | ml/m²·day·Mpa | 12 | 13 | 39 | 20 |
| | | After retorting — Water vapor permeability | g/m²·day | 5 | 6 | 10 | 7 |
| | | Pinhole resistance | number | 23 | 28 | 8 | 10 |
| | | Bag breakage resistance | times | 18 | 23 | 58 | 19 |
| | | Aroma retention properties | - | O | Δ | Δ | O |

[Table 4]

| | | | Unit | Example 1-10 | Comparative Example 1-5 |
|---|---|---|---|---|---|
| Laminated body configuration | Another thermoplastic resin layer | | - | Biaxially stretched polyethylene terephthalate film | Same as on the left |
| | Biaxially stretched polybutylene terephthalate film | | - | Example 1-1 | Comparative Example 1-3 |
| | Inorganic thin film layer | | - | $SiO_2/AlO_3$ | Same as on the left |
| | Heat-seal layer | | - | Un-stretched polypropylene film | Same as on the left |
| Laminated body physical properties | Barrier properties | Before retorting | Oxygen permeability | $ml/m^2 \cdot day \cdot MPa$ | 8 | 20 |
| | | | Water vapor permeability | $g/m^2 \cdot day$ | 2.1 | 3.4 |
| | | After retorting | Oxygen permeability | $ml/m^2 \cdot day \cdot Mpa$ | 11 | 38 |
| | | | Water vapor permeability | $g/m^2 \cdot day$ | 5 | 11 |
| | Pinhole resistance | | number | 9 | 10 |
| | Bag breakage resistance | | times | 39 | 39 |
| | Aroma retention properties | | - | ◯ | △ |

Examples 2-1 to 2-6 and Comparative Examples 2-1 to 2-4 will be described.

[Raw Material Resin]

(Polybutylene Terephthalate Resin 2; Examples 2-1 to 2-5, Comparative Examples 2-1 to 2-4)

In production of films of Examples 2-1 to 2-5, Comparative Examples 2-1 to 2-4 described later, 1100-211XG (CHANG CHUN PLASTICS CO., LTD., intrinsic viscosity: 1.28 dl/g) was used as a polybutylene terephthalate resin 2 that is a main raw material.

(Polyester 2-1; Example 2-1, Comparative Examples 2-1 to 2-4)

Dimethyl terephthalate, dimethyl adipate, and 1,4-butanediol were put into a metallic autoclave having an agitator such that the ratio thereof was dimethyl terephthalate/dimethyl adipate//1,4-butanediol = 40/60//100 (mol%), and tetra-n-butyl titanate was further added as a catalyst (21 ppm on a titanium metal basis to the polymer). Then, the temperature of the mixture was gradually increased from room temperature to 210°C under normal pressure over 4 hours, reaction was carried out at 210°C for 20 minutes, and methanol generated was removed from the reaction system, whereby butylene terephthalate having a low polymerization degree was prepared. The butylene terephthalate having a low polymerization degree was transferred to an autoclave having a vacuum pump, the pressure was reduced to 1.0 mmHg and the temperature was increased to 245°C gradually over 2 hours, and reaction was carried out in this state for 2 hours 15 minutes. The resultant polymer was discharged by application of pressure with nitrogen after the reaction and rapidly cooled with water to obtain an adipic acid-copolymerized polybutylene terephthalate resin (polyester 2-1).
The ratio of components, derived from the above components, of the obtained resin was dimethyl terephthalate/dimethyl adipate//1,4-butanediol = 40/60//100 (mol%). The glass transition temperature is shown in Tables 5 and 6.

(Polyester 2-2; Example 2-2)

The same polymerization as for the above-described polyester 2-1 was carried out except that the ratio of dimethyl terephthalate, dimethyl adipate, and 1,4-butanediol was dimethyl terephthalate/dimethyl adipate//1,4-butanediol = 65/35//100 (mol%), to obtain an adipic acid-copolymerized polybutylene terephthalate resin (polyester 2-2).
The ratio of components, derived from the above components, of the obtained resin was dimethyl terephthalate-derived component/dimethyl adipate-derived component//1,4-butanediol-derived component = 65/35//100 (mol%). The glass transition temperature is shown in Table 4.

(Polyester 2-3; Example 2-3)

The same polymerization as for the above-described polyester 2-1 was carried out except that the ratio of dimethyl terephthalate, dimethyl sebacate, and 1,4-butanediol was dimethyl terephthalate/dimethyl sebacate//1,4-butanediol = 53/47//100 (mol%), to obtain a sebacic acid-copolymerized polybutylene terephthalate resin (polyester 2-3).
The ratio of components, derived from the above components, of the obtained resin was dimethyl terephthalate-derived component/dimethyl sebacate-derived component//1,4-butanediol-derived component = 53/47//100 (mol%). The glass transition temperature is shown in Table 4.

(Polyester 2-4; Example 2-4)

The same polymerization as for the above-described polyester 2-1 was carried out except that the ratio of dimethyl terephthalate, 1,4-butanediol, and polytetramethylene glycol (PTMG, Mw = 1000) was dimethyl terephthalate//1,4-butanediol/PTMG = 100//85/15 (mol%), to obtain a PTMG-copolymerized polybutylene terephthalate resin (polyester 2-4).
The ratio of components, derived from the above components, of the obtained resin was dimethyl terephthalate-derived component//1,4-butanediol-derived component/PTMG-derived component = 100//85/15 (mol%). The glass transition temperature is shown in Table 4.

(Polyester 2-5; Example 2-5, Comparative Example 2-4)

In production of a film of Example 2-5 described below, a polyethylene terephthalate resin formed from terephthalic acid and ethylene glycol such that the ratio thereof was terephthalic acid//ethylene glycol = 100//100 (mol%) and having an intrinsic viscosity of 0.62 dl/g was used as a polyester 2-5.
The ratio of components, derived from the above components, of the obtained resin was terephthalic acid-derived component//ethylene glycol-derived component = 100//100 (mol%). The glass transition temperature is shown in Table 5.

(Polyester 2-6; Example 2-6)

The same polymerization as for the above-described polyester 2-1 was carried out except that the ratio of dimethyl terephthalate, dimethyl adipate, and 1,4-butanediol was dimethyl terephthalate/dimethyl adipate//1,4-butanediol = 80/20//100 (mol%), to obtain an adipic acid-copolymerized polybutylene terephthalate resin (polyester 2-6).
The ratio of components derived from the above components of the obtained resin was dimethyl terephthalate-derived component/dimethyl adipate-derived component//1,4-butanediol-derived component = 80/20//100 (mol%). The glass transition temperature is shown in Table 5.

[Example 2-1]

A mixture obtained by blending 80 parts by weight of the polybutylene terephthalate resin, 20 parts by weight of the polyester 2-1 (adipic acid-copolymerized PET resin), and silica particles having an average particle size of 2.4 $\mu$m as inactive particles such that the silica concentration was 1600 ppm, was melted at 290°C using a single screw extruder, and then was introduced to the melt line with a static mixer having 12 elements. Accordingly, the polybutylene terephthalate melted body was divided and laminated to obtain a multi-layer melted body formed of the same raw materials. The melted body was cast from a T-die at 270°C and brought into close contact with a cooling roll at 25°C by an electrostatic adhesion method to obtain an un-stretched sheet.
Next, the un-stretched sheet was subjected to 3.3 times roll stretching at 70°C in the machine direction (MD) and then subjected to 4.2 times stretching at 90°C in the transverse direction (TD) by passing the sheet through a tenter. The sheet was subjected to a heat treatment under tension at 210°C for 3 seconds and to a relaxation treatment at a relaxation rate of 5% for 1 second. Thereafter, gripping parts at both ends were cut and removed by 10% each to obtain a mill roll of a biaxially-stretched polybutylene terephthalate film having a thickness of 15 $\mu$m. The film production conditions, physical properties, and evaluation results of the obtained film are shown in Table 5.

[Examples 2-1 to 2-4]

The same procedures as those in Example 2-1 were carried out except that the raw material composition and the film production conditions in Example 2-1 were changed to those described in Table 5.

[Examples 2-5 and 2-6]

The same procedures as those in Example 2-1 were carried out except that the raw material composition and the film production conditions in Example 2-1 were changed to those described in Table 5.

[Comparative Examples 2-1 to 2-4]

The same procedures as those in Example 2-1 were carried out except that the raw material composition and the film production conditions in Example 2-1 were changed to those described in Table 6.
As shown in Table 5, the laminated bodies for which the biaxially-stretched polybutylene terephthalate films of Examples 2-1 to 2-4 were used had excellent pinhole resistance at low temperature, bag breakage resistance, and aroma retention properties.
As shown in Table 5, the laminated bodies for which the biaxially-stretched polybutylene terephthalate films of Examples 2-5 and 2-6 were used had excellent aroma retention properties.
As shown in Table 6, regarding the biaxially-stretched polybutylene terephthalate film of Comparative Example 2-1, when the temperature during TD stretching was low, the amount of a low-molecular-weight component in the film increased, and thus the amount of the low-molecular-weight component generated after heating of the film increased.
In addition, regarding the biaxially-stretched polybutylene terephthalate film of Comparative Example 2-2, when the extrusion temperature during film production was high, a low-molecular-weight component generated in the extrusion step was not sufficiently removed, and thus the amount of the low-molecular-weight component generated from the film increased.
Moreover, as shown in Comparative Example 2-3, when the thermo-setting treatment temperature during film production was low, a low-molecular-weight component generated in the extrusion step was not sufficiently removed, and thus the amount of the low-molecular-weight component generated from the film increased.
Furthermore, regarding the biaxially-stretched polybutylene terephthalate film of Comparative Example 2-4, when the thermo-setting treatment temperature during film production was low, a low-molecular-weight component generated in the extrusion step was not sufficiently removed, and thus the amount of the low-molecular-weight component generated from the film increased.

[Table 5]

| | | Unit | Example 2-1 | Example 2-2 | Example 2-3 | Example 2-4 | Example 2-5 | Example 2-6 |
|---|---|---|---|---|---|---|---|---|
| Raw material | Polybutylene terephthalate resin 2 | - | 1100-211XG | Same as on the left | Same as on the left | Same as on the left | Same as on the left | Same as on the left |
| | Content ratio | % by mass | 80 | 80 | 65 | 90 | 60 | 80 |
| | Copolymerized polybutylene terephthalate resin | - | Polyester 2-1 | Polyester 2-2 | Polyester 2-3 | Polyester 2-4 | - | Polyester 2-6 |
| | Glass transition temperature | °C | -35 | -9 | -28 | -80 | - | 19 |
| | Content ratio | % by mass | 20 | 20 | 35 | 10 | - | 20 |
| | Polyethylene terephthalate resin | - | - | - | - | - | Polyester 2-5 | - |
| | Glass transition temperature | °C | - | - | - | - | 75 | - |
| | Content ratio | % by mass | - | - | - | - | 40 | - |
| Film production conditions | Die temperature | °C | 270 | 270 | 270 | 270 | 270 | 270 |
| | Presence/absence of super multi-layering | - | Presence | Presence | Presence | Presence | Presence | Presence |
| | Number of elements | number | 12 | 12 | 12 | 12 | 12 | 12 |
| | Cooling roll temperature | °C | 25 | 25 | 15 | 20 | 30 | 20 |
| | MD stretching temperature | °C | 70 | 70 | 70 | 70 | 80 | 70 |
| | MD stretching ratio | times | 3.3 | 3.3 | 3.3 | 3.3 | 3.5 | 3.3 |
| | TD stretching temperature | °C | 90 | 90 | 90 | 90 | 120 | 90 |
| | TD stretching ratio | times | 4.2 | 4.2 | 4.2 | 4.5 | 4.3 | 4.3 |
| | Thermo-Setting temperature | °C | 210 | 210 | 210 | 210 | 230 | 210 |
| | Relaxation rate | % | 5 | 5 | 5 | 5 | 5 | 5 |
| Film physical properties | Thickness | μm | 15 | 15 | 15 | 15 | 15 | 15 |
| | Thickness accuracy | % | 8 | 6 | 7 | 6 | 6.00 | 7 |
| | MD thermal shrinkage | % | 1.1 | 1 | 1.20 | 0.92 | 0.91 | 1 |
| | TD thermal shrinkage | % | 1.49 | 1.31 | 1.51 | 1.21 | 1.41 | 1.32 |
| | Impact strength | J/μm | 0.068 | 0.071 | 0.065 | 0.069 | 0.048 | 0.062 |
| | Tetrahydrofuran generated amount | ppb | 64 | 71 | 42 | 70 | 36 | 59 |
| | 1,4-butanediol generated amount | ppb | 1680 | 1700 | 1110 | 1710 | 940 | 1610 |
| | Total generated amount | ppb | 1744 | 1771 | 1152 | 1780 | 976 | 1669 |
| Laminated body physical properties | Pinhole resistance | - | ○ | ○ | ○ | ○ | × | △ |
| | Bag breakage resistance | times | 78 | 51 | 62 | 50 | 2 | 21 |
| | Aroma retention properties | - | ○ | ○ | ○ | ○ | ○ | ○ |

[Table 6]

| | | Unit | Comparative Example 2-1 | Comparative Example 2-2 | Comparative Example 2-3 | Comparative Example 2-4 |
|---|---|---|---|---|---|---|
| Raw material | Polybutylene terephthalate resin 2 | - | 1100-211XG | Same as on the left | Same as on the left | Same as on the left |
| | Content ratio | % by mass | 50 | 80 | 80 | 60 |
| | Copolymerized polybutylene terephthalate resin | - | Polyester 2-1 | Polyester 2-1 | Polyester 2-1 | Polyester 2-1 |
| | Glass transition temperature | °C | -35 | -35 | -35 | -35 |
| | Content ratio | % by mass | 50 | 20 | 20 | 10 |
| | Polyethylene terephthalate resin | - | - | - | - | Polyester 2-5 |
| | Glass transition temperature | °C | - | - | - | 75 |
| | Content ratio | % by mass | - | - | - | 30 |
| Film production conditions | Die temperature | °C | 270 | 295 | 270 | 280 |
| | Presence/absence of super multi-layering | - | Presence | Presence | Presence | Presence |
| | Number of elements | number | 12 | 12 | 12 | 12 |
| | Cooling roll temperature | °C | 20 | 25 | 25 | 19 |
| | MD stretching temperature | °C | 70 | 70 | 70 | 60 |
| | MD stretching ratio | times | 3.3 | 3 | 3 | 3.5 |
| | TD stretching temperature | °C | 80 | 90 | 90 | 80 |
| | TD stretching ratio | times | 4.3 | 4 | 4 | 4.2 |
| | Thermo-Setting temperature | °C | 210 | 205 | 180 | 200 |
| | Relaxation rate | % | 5 | 5 | 1 | 5 |
| Film physical properties | Thickness | μm | 15 | 15 | 15 | 20 |
| | Thickness accuracy | % | 12.00 | 7 | 10 | 6 |
| | MD thermal shrinkage | % | 1.51 | 0.9 | 5 | 1.730 |
| | TD thermal shrinkage | % | 2.3 | 1.42 | 3 | 1.370 |
| | Impact strength | J/μm | 0.051 | 0.047 | 0.067 | 0.075 |
| | Tetrahydrofuran generated amount | ppb | 102 | 104 | 107 | 88.2 |
| | 1,4-butanediol generated amount | ppb | 1940 | 2110 | 2200 | 1788 |
| | Total generated amount | ppb | 2042 | 2214 | 2307 | 1876 |
| Laminated body physical properties | Pinhole resistance | - | O | △ | O | △ |
| | Bag breakage resistance | times | 81 | 31 | 93 | 25 |
| | Aroma retention properties | - | × | △ | △ | △ |

INDUSTRIAL APPLICABILITY

According to the present invention, a biaxially-stretched polyester film that can be used as a base film for vapor deposition, has excellent barrier properties, dimensional stability, processability, bag breakage resistance, and chemical resistance, and has less transfer of an extract to contents after retorting, can be obtained and can be widely used as a packaging material particularly suitably used for retort pouch packaging, and thus such a film is expected to greatly contribute to the industry.

**Claims**

1.   A biaxially-stretched polyester film having features (a), (b), (c), and (d) below and having a thickness of 10 to 30 μm:

(a) the biaxially-stretched polyester film is formed from a polyester resin composition containing a polybutylene terephthalate resin (A) in a range of 60% by mass or more;
(b) a thermal shrinkage of the biaxially-stretched polyester film at 150°C for 30 minutes is -2 to +2%;
(c) thickness accuracy of the biaxially-stretched polyester film is 1 to 20%; and **characterized by**
(d) a total amount of 1,4-butanediol and tetrahydrofuran volatilized during heating at a temperature of 135°C for 60 minutes is not more than 1800 ppb.

2. The biaxially-stretched polyester film according to claim 1, wherein the polyester composition contains 60 to 90% by weight of the polybutylene terephthalate resin (A) and a polyester resin (B) different from the polybutylene terephthalate resin (A) and having a glass transition temperature of 0°C or higher.

3. The biaxially-stretched polyester film according to claim 1, wherein the polyester composition contains 60 to 90% by weight of the polybutylene terephthalate resin (A) and a polyester resin (C) different from the polybutylene terephthalate resin (A) and having a glass transition temperature lower than 0°C.

4. The biaxially-stretched polyester film according to claim 3, wherein the polyester resin (C) different from the polybutylene terephthalate resin (A) and having a glass transition temperature lower than 0°C is at least one resin selected from between a polybutylene terephthalate resin obtained by copolymerizing at least one dicarboxylic acid selected from the group consisting of isophthalic acid, orthophthalic acid, naphthalenedicarboxylic acid, biphenyldicarboxylic acid, cyclohexanedicarboxylic acid, adipic acid, azelaic acid, and sebacic acid, and a polybutylene terephthalate resin obtained by copolymerizing at least one diol component selected from the group consisting of ethylene glycol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate diol.

5. A laminated film formed by an inorganic thin film layer being laminated on at least one surface of the biaxially-stretched polyester film according to any one of claims 1 to 4.

6. A laminated body formed by a heat-sealable resin layer being laminated on the biaxially-stretched polyester film according to any one of claims 1 to 4 or on a surface at the inorganic thin film layer side in claim 5.

7. A packaging bag formed from the laminated body according to claim 6.


**Patentansprüche**

1. Eine biaxal gestreckte Polyesterfolie mit den nachstehenden Merkmalen (a), (b), (c) und (d) und mit einer Dicke von 10 bis 30 µm:

(a) die biaxal gestreckte Polyesterfolie ist aus einer Polyesterharzzusammensetzung gebildet, die ein Polybutylenterephthalatharz (A) in einem Bereich von 60 Massen-% oder mehr enthält;
(b) eine thermische Schrumpfung der biaxal gestreckten Polyesterfolie bei 150°C für 30 Minuten beträgt -2 bis +2%;
(c) die Dickengenauigkeit der biaxal gestreckten Polyesterfolie beträgt 1 bis 20%; und ist **gekennzeichnet durch**
(d) eine Gesamtmenge von 1,4-Butandiol und Tetrahydrofuran, die sich während des Erwärmens bei einer Temperatur von 135°C für 60 Minuten verflüchtigt haben, von nicht mehr als 1800 ppb.

2. Die biaxal gestreckte Polyesterfolie nach Anspruch 1, wobei die Polyesterzusammensetzung 60 bis 90 Gew.-% des Polybutylenterephthalatharzes (A) und ein Polyesterharz (B), das von dem Polybutylenterephthalatharz (A) verschieden ist und eine Glasübergangstemperatur von 0°C oder höher aufweist, enthält.

3. Die biaxal gestreckte Polyesterfolie nach Anspruch 1, wobei die Polyesterzusammensetzung 60 bis 90 Gew.-% des Polybutylenterephthalatharzes (A) und ein Polyesterharz (C), das von dem Polybutylenterephthalatharz (A) verschieden ist und eine Glasübergangstemperatur von niedriger als 0°C aufweist, enthält.

4. Die biaxal gestreckte Polyesterfolie nach Anspruch 3, wobei das Polyesterharz (C), das von dem Polybutylenterephthalatharz (A) verschieden ist und eine Glasübergangstemperatur von niedriger als 0°C aufweist, mindestens ein Harz ist, ausgewählt zwischen einem Polybutylenterephthalatharz, erhalten durch Copolymerisieren mindestens einer Dicarbonsäure, ausgewählt aus der Gruppe bestehend aus Isophthalsäure, Orthophthalsäure, Naphthalendicarbonsäure, Biphenyldicarbonsäure, Cyclohexandicarbonsäure, Adipinsäure, Azelainsäure und Sebacinsäure, und einem Polybutylenterephthalatharz, erhalten durch Copolymerisieren mindestens einer Diolkomponente, ausgewählt aus der Gruppe bestehend aus Ethylenglycol, 1,3-Propylenglycol, 1,2-Propylenglycol, Neopentylglycol, 1,5-Pentandiol, 1,6-Hexandiol, Diethylenglycol, Cyclohexandiol, Polyethylenglycol, Polytetramethylenglycol und Polycarbonatdiol.

5. Eine laminierte Folie, gebildet, in dem eine anorganische Dünnfilmschicht auf mindestens einer Oberfläche der biaxal gestreckten Polyesterfolie nach einem der Ansprüche 1 bis 4 laminiert ist.

6. Ein laminierter Körper, gebildet, in dem eine heißsiegelfähige Harzschicht auf der biaxal gestreckten Polyesterfolie nach einem der Ansprüche 1 bis 4 oder auf einer Oberfläche an der anorganischen Dünnfilmschichtseite in Anspruch 5 laminiert ist.

7. Ein Verpackungsbeutel, gebildet aus dem laminierten Körper nach Anspruch 6.

## Revendications

1. Film de polyester à étirement biaxial ayant les caractéristiques (a), (b), (c) et (d) ci-dessous et ayant une épaisseur de 10 à 30 μm :

   (a) le film de polyester à étirement biaxial est formé à partir d'une composition de résine de polyester contenant une résine de poly(téréphtalate de butylène) (A) de l'ordre de 60 % en masse ou plus ;
   (b) un retrait thermique du film de polyester à étirement biaxial à 150°C pendant 30 minutes est de -2 à +2 % ;
   (c) la précision d'épaisseur du film de polyester à étirement biaxial est de 1 à 20 %; et **caractérisé en ce que**
   (d) la quantité totale de 1,4-butanediol et de tétrahydrofurane évaporés durant un chauffage à une température de 135°C pendant 60 minutes n'est pas plus de 1800 ppb.

2. Film de polyester à étirement biaxial selon la revendication 1, dans lequel la composition de polyester contient 60 à 90 % en poids de la résine de poly(téréphtalate de butylène) (A) et une résine de polyester (B) différente de la résine de poly(téréphtalate de butylène) (A) et ayant une température de transition vitreuse de 0°C ou plus élevée.

3. Film de polyester à étirement biaxial selon la revendication 1, dans lequel la composition de polyester contient 60 à 90 % en poids de la résine de poly(téréphtalate de butylène) (A) et une résine de polyester (C) différente de la résine de poly(téréphtalate de butylène) (A) et ayant une température de transition vitreuse inférieure à 0°C.

4. Film de polyester à étirement biaxial selon la revendication 3, dans lequel la résine de polyester (C) différente de la résine de poly(téréphtalate de butylène) (A) et ayant une température de transition vitreuse inférieure à 0°C est au moins une résine sélectionnée parmi entre une résine de poly(téréphtalate de butylène) obtenue par copolymérisation au moins d'un acide dicarboxylique sélectionné dans le groupe constitué par l'acide isophtalique, l'acide orthophtalique, l'acide naphtalènedicarboxylique, l'acide biphényldicarboxylique, l'acide cyclohexanedicarboxylique, l'acide adipique, l'acide azélaïque et l'acide sébacique, et une résine de poly(téréphtalate de butylène) obtenue par copolymérisation au moins d'un composant diol sélectionné dans le groupe constitué par l'éthylèneglycol, le 1,3-propylèneglycol, le 1,2-propylèneglycol, le néopentylglycol, le 1,5-pentanediol, le 1,6-hexanediol, le diéthylèneglycol, le cyclohexanediol, le polyéthylèneglycol, le polytétraméthylèneglycol, et le polycarbonatediol.

5. Film stratifié formé d'une couche en film mince inorganique stratifiée sur au moins une surface du film de polyester à étirement biaxial de l'une quelconque des revendications 1 à 4.

6. Corps stratifié formé d'une couche de résine thermoscellable qui est stratifiée sur le film de polyester à étirement biaxial de l'une quelconque des revendications 1 à 4 ou sur une surface du côté de la couche en film mince inorganique de la revendication 5.

7. Sac d'emballage formé à partir du corps stratifié de la revendication 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H1110725 B
- JP H6278240 B
- JP 2013154605 A
- JP 2012214248 A
- JP H8311212 B
- JP H09194604 A

### Non-patent literature cited in the description

- **OSAMU SATO et al.** *Chem. Lett.,* 2015, vol. 44, 1312-1314
- Apparatus and Containers and Packaging. Ministry of Health and Welfare, 1982
- Apparatus and Containers and Packaging. the Food Hygiene Act. Ministry of Health and Welfare, 1982